(19) Europäisches Patentamt
European Patent Office
Office européen des brevets

(11) **EP 4 474 087 A1**

(12) **EUROPEAN PATENT APPLICATION**
published in accordance with Art. 153(4) EPC

(43) Date of publication:
**11.12.2024   Bulletin 2024/50**

(21) Application number: **22930863.0**

(22) Date of filing: **10.03.2022**

(51) International Patent Classification (IPC):
**B23D 19/06** (2006.01)       **B23Q 11/10** (2006.01)

(52) Cooperative Patent Classification (CPC):
**B23Q 11/10;** B23D 19/06

(86) International application number:
**PCT/JP2022/010686**

(87) International publication number:
**WO 2023/170882 (14.09.2023 Gazette 2023/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **JFE Steel Corporation
Tokyo 100-0011 (JP)**

(72) Inventors:
• **HIRANO, Yuichiro
Tokyo 100-0011 (JP)**

• **IKEDA, Gosuke
Tokyo 100-0011 (JP)**
• **YAMAMOTO, Kiyoshi
Tokyo 100-0011 (JP)**
• **TANAKA, Mikio
Tokyo 100-0011 (JP)**
• **ONO, Yoshihiko
Tokyo 100-0011 (JP)**

(74) Representative: **Grünecker Patent- und
Rechtsanwälte
PartG mbB
Leopoldstraße 4
80802 München (DE)**

(54) **STEEL SHEET PRODUCTION METHOD, TRIMMING DEVICE, AND PRODUCTION APPARATUS, ROLLED STEEL SHEET, COILED MATERIAL, AND BLANK MATERIAL**

(57)    The blade chipping frequency is further improved, and the yield of steel sheet production is improved. By directly applying a lubricating oil to a non-trimmed steel sheet (1), insufficient supply of the oil is resolved. By reducing the friction, the frequency of blade chipping of the trimmer is suppressed. That is, there is provided a production method of a steel sheet (1) including a process of cutting an edge part of the steel sheet (1) with a rotary blade (2), the production method including: adhering a lubricating oil to a position to be cut with the rotary blade (2) on a surface (1a, 1b) of the steel sheet (1) before cutting in the process of cutting the steel sheet (1) with the rotary blade (2).

FIG. 1

CONVEYANCE DIRECTION

EP 4 474 087 A1

## Description

Technical Field

The present disclosure relates to a technology relating to production of a steel sheet including a cutting technology and a cutting process of an edge part (sheet width direction end part) of the steel sheet, a produced steel sheet, and a coiled material or a blank material formed of the steel sheet. In particular, the present disclosure is a technology suitable for producing a high-tensile steel sheet (high tensile material) having a tensile strength of 590 MPa or more and a sheet thickness of 0.4 mm or more, for example.

Background Art

For example, in a hot-dip galvanizing plant or a cold rolling plant, a step (equipment) of trimming an edge part (width direction end part) of a steel sheet according to a product width is provided. In recent years, there has been an increasing demand for high-tensile steel sheets in fields such as automobiles or building materials. Therefore, during production of the steel sheet, a process of cutting the high-tensile steel sheet with a rotary blade (trimming blade) may also be executed.

However, when the high-tensile steel sheet (hereinafter, also referred to as a high-strength steel sheet) is cut, the rotary blade may be chipped due to a load from the steel sheet, and an untrimmed material (non-trimmed material) may be produced. In particular, assuming that a high-tensile steel sheet having a tensile strength of 590 MPa or more and a sheet thickness of, for example, 0.4 mm or more is cut, a load applied to the blade during trimming is high, and the blade chipping cannot be avoided.

In contrast, for example, as disclosed in PTL 1, a method of applying a cutting oil (lubricating oil) to a rotating rotary blade to deal with the blade chipping is used. In PTL 1, by directly spraying and applying the cutting oil to the rotary blade, lubricity is imparted between the blade and the steel sheet to reduce friction.

Citation List

Patent Literature

PTL 1: JP 2005-153116 A

Summary of Invention

Technical Problem

It is considered that the blade chipping of the rotary blade due to cutting occurs when stress concentrates on a corner portion (edge portion) of the blade. It is presumed that the load applied to the blade includes two kinds of loads, that is, a normal force generated along with a shear load and a lateral force generated by the friction between the steel sheet and the blade.

It is considered that the lateral force can be suppressed by reducing the friction between the steel sheet and the blade.

As in PTL 1, a method of directly supplying a cutting oil to the rotary blade is used as a measure for improving the lubricity between the blade and the steel sheet and reducing the friction. However, further improvement in blade chipping frequency is required.

In addition, according to an investigation by the present inventors, a case where a steel sheet side is damaged due to occurrence of blade chipping of a rotary blade during cutting is also assumed. When an end surface of the steel sheet is damaged, in a step after a cutting process with a rotary blade or in a processing line of a manufacturer such as an automotive manufacturer that purchases a rolled steel sheet or a coiled material as a product, iron powder peeled off from the damaged portion of the steel sheet adheres to the steel sheet that is being processed, and thus pressing flaws are likely to occur on the steel sheet. In addition, there is a concern that a trouble may occur due to adhesion of iron powder to processing equipment.

The present invention focuses on the above-described points and is to further improve the blade chipping frequency and to improve the yield of steel sheet production.

Solution to Problem

The present inventors investigated effects during cutting obtained by directly applying a cutting oil to a rotary blade, and found that the blade chipping frequency needs to be further improved.

That is, the present inventors found the following points as disadvantageous effects of a technology of directly applying a cutting oil to a rotary blade.

(1) When a cutting oil is directly applied to a rotating rotary blade, the oil is scattered by the centrifugal force of the rotation of the rotary blade, and the supply of the cutting oil to the cut portion is insufficient. A method of supplying the oil to the blade at a position near the cut portion is also considered, but is difficult to apply in consideration of interference with other equipment. In addition, even when a large amount of the oil is directly supplied to the rotary blade, in the process of cutting the steel sheet with the blade, a phenomenon in which the blade slides on the steel sheet after coming into contact with the steel sheet occurs. The oil on the blade edge is immediately removed by the sliding of the blade.

(2) In addition, this removal of the oil brings about a status where penetration of oil between the blade and the steel sheet is insufficient. Accordingly even when a large amount of the oil is applied to the blade, the effect of improving blade chipping is small. In particular, in a high-strength steel sheet having a strength of 590 MPa or more, blade chipping during cutting is not sufficiently suppressed.

The formation of iron powder caused by blade chipping causes a problem.

(3) In contrast, by directly applying the lubricating oil to the non-trimmed steel sheet with the rotary blade, even in the process where the blade slides on the steel sheet after coming into contact with the steel sheet, the lack of the oil on the blade edge of the trimming blade can be effectively suppressed, and blade chipping can be significantly suppressed during the cutting of the high-strength steel sheet.

According to the present invention, based on these findings, a technology is established in which by directly applying (adhering) a lubricating oil to a non-trimmed steel sheet, insufficient supply of the oil is resolved, and by reducing the friction, the frequency of blade chipping of the trimmer is suppressed.

In addition, in the steel sheet produced by applying the method of the present invention, the adverse effects of iron powder formed during cutting with the chipped rotary blade can be suppressed, and a technology capable of significantly suppressing the occurrence of pressing flaws in a steel sheet production line, an automobile pressing line, or the like after edge cutting is established.

That is, in order to solve the problem, according to one aspect of the present invention, there is provided a production method of a steel sheet including a process of cutting an edge part of the steel sheet with a rotary blade, in which a lubricating oil is adhered to a position to be cut with the rotary blade on a steel sheet surface before cutting in the process of cutting the steel sheet with the rotary blade.

In addition, according to another aspect of the present invention, there is provided a trimming device for cutting an edge part of a conveyed steel sheet with a rotary blade, the trimming device including: a lubricating oil adhesion device provided upstream of the rotary blade and configured to adhere a lubricating oil to a position of the steel sheet to be cut with the rotary blade.

Further, according to still another aspect of the present invention, there are provided a rolled steel sheet, a coiled material, and a blank material including a smooth end surface (first cut surface) on a cut surface in a width direction.

The rolled steel sheet refers to a steel sheet produced in a production line including a rolling step. In addition, in the rolled steel sheet according to the present embodiment, at least one end surface in a width direction is formed of a cut surface.

Advantageous Effects of Invention

According to the aspect of the present invention, the supply of the lubricating oil between the blade and the steel sheet can be more reliably executed, and the blade chipping frequency can be further improved to improve the yield of the steel sheet production.

In addition, according to the aspect of the present invention, the steel sheet or the coiled material including the smooth end surface (first cut surface) on the cut surface of the edge (width direction end part) can be provided. As a result, according to the aspect of the present invention, the peeling of iron powder can be suppressed and a steel sheet or the like where pressing flaws in a steel sheet production line or an automobile pressing line can be suppressed.

That is, in the steel sheet obtained by applying the cutting method according to the aspect of the present invention and the coiled material or the blank material formed of the steel sheet, the formation of iron powder caused by cutting with the chipped rotary blade (trimming blade) can be suppressed. As a result, the occurrence of pressing flaws in a processing line such as a steel sheet production line or an automobile pressing line after edge cutting can be significantly suppressed.

Brief Description of Drawings

FIG. 1 is a side view illustrating a trimming device for a steel sheet according to an embodiment based on the present invention;
FIG. 2 is a plan view illustrating the trimming device for a steel sheet according to the embodiment based on the present invention;
FIG. 3 is a side view illustrating another configuration example of a lubricating oil adhesion device;
FIGS. 4A and 4B are SEM images of a shear surface (cut surface), in which FIG. 4A illustrates Comparative Example 2 and FIG. 4B illustrates Comparative Example 7; and
FIG. 5 is an SEM image of a shear surface (cut surface).

Description of Embodiments

Next, an embodiment of the present invention will be described with reference to the drawings.
In the present embodiment, trimmer equipment (trimming step) of a surface-treated steel sheet production line in steel sheet production will be described as an example. The present invention can also be applied to a production plant of a rolled steel sheet such as a cold-rolled steel sheet or a hot-rolled steel sheet.

"Regarding Steel Sheet to be Processed"

The present embodiment is applicable to a high-tensile steel sheet to be processed, in particular, to a high-tensile steel sheet having a tensile strength of 590 MPa or more and a sheet thickness of 0.4 mm or more. The present embodiment may be applied to, for example, a high-tensile steel sheet having a sheet thickness of 4.0 mm or less.
Examples of the steel sheet to be cut with at least one rotary blade include a GI, a GA, an EG, a CRS, a tinplated steel sheet, a Zn-plated steel sheet, and an Alplated steel sheet. However, the steel sheet is not limited to these examples and the present disclosure is applicable to any steel sheet. The present embodiment is also applicable to, for example, a steel sheet obtained by applying a solid lubricant film is applied to a GI or a GA or a steel sheet including an organic coating.
Further, as a result of an investigation by the present inventors, a new problem was found in that, when a high-strength steel sheet having a tensile strength of 1180 MPa or more is cut, a material with trimming defects caused by blade chipping is produced at an extremely high frequency of about 8% in the produced coil, and an offline re-trimming process of the material with defects is required. In a case where the present disclosure is applied to solve this problem, it was found that, even in a high-strength steel sheet having a strength of 1180 MPa grade or 1470 MPa grade and a sheet thickness of 0.4 mm or more where trimming defects significantly occurs due to blade chipping, the occurrence rate of the trimming defects can be significantly reduced.
In the high-tensile steel sheet to be processed according to the present embodiment, for example, a composition includes, by mass%, C: 0.03% or more and 0.35% or less, Si: 0.01% or more and 3.00% or less, Mn: 0.50% or more and 3.50% or less, Al: 0.001% or more and 1.000% or less, P: 0.100% or less, S: 0.0100% or less, N: 0.0200% or less, and a remainder including Fe and unavoidable impurities.
In the present specification, unless otherwise specified, % regarding a component represents mass%.
Next, the reason for limiting the chemical composition of the steel sheet will be described.

· C: 0.03% or more and 0.35% or less

C has an effect of increasing the strength of a steel strip. To that end, the C content needs to be 0.03% or more. On the other hand, when the C content exceeds 0.35%, weldability required for use as a material for an automobile or a home electric appliance deteriorates. Accordingly, the C content may be 0.03% or more and 0.35% or less.
From the viewpoint of obtaining a high-strength material having a tensile strength of 1180 MPa or more, the C content is preferably 0.10% or more. In addition, from the viewpoint of obtaining a high-strength material having a tensile strength of 1320 MPa or more, the C content is preferably 0.13% or more.

· Si: 0.01% or more and 3.00% or less

Si is an element effective for reinforcing steel and improving ductility. To that end, the Si content needs to be 0.01% or more. On the other hand, when the Si content exceeds 3.00%, Si forms an oxide on the surface, and the plating appearance deteriorates. Accordingly, the Si content may be 0.01% or more and 3.00% or less.

· Mn: 0.50% or more and 3.50% or less

Mn is an element useful for increasing hardenability and the strength of the steel sheet. The effect cannot be obtained when the Mn content is less than 0.50%. On the other hand, when the Mn content exceeds 3.50%, Mn segregation occurs, and workability deteriorates. Accordingly, the Mn content is desirably 0.50% or more and 3.50% or less.

From the viewpoint of obtaining a high-strength material having a tensile strength of 1180 MPa or more, the Mn content is preferably 1.00% or more. When cooling after annealing is performed in equipment having a relatively slow cooling rate, for example, gas jet cooling equipment, the Mn content is more preferably 2.20% or more from the viewpoint of obtaining a steel sheet having a strength of 1180 MPa grade.

Al: 0.001% to 1.000%

Al is added to deoxidize molten steel, and when the Al content is less than 0.001%, this object is not achieved. On the other hand, when the Al content exceeds 1.000%, Al forms an oxide on the surface, and the plating appearance (surface appearance) deteriorates. Accordingly, the Al content may be 0.001% or more and 1.000% or less.

· P: 0.100% or less

P is one of the elements that are unavoidably included, and to adjust the P content to be less than 0.005%, an increase in cost is concerned. Therefore, the P content is desirably 0.005% or more. On the other hand, slab productivity deteriorates as the P content increases. Further, the inclusion of P suppresses an alloying reaction, which causes plating unevenness. In order to suppress the plating unevenness, the P content needs to be 0.100% or less. Accordingly, the P content may be 0.100% or less. The P content is preferably 0.050% or less.

S: 0.0100% or less

S is an element that is unavoidably included in the steel making process. However, when a large amount of S is included, weldability deteriorates. Therefore, the S content may be 0.0100% or less. To adjust the S content to be less than 0.0002%, an increase in cost is concerned. Therefore, the S content is preferably 0.0002% or more.

· N: 0.0200% or less

N is an element that is unavoidably included in the steel making process. However, when a large amount of N is included, ductility deteriorates. Therefore, the N content may be 0.0200% or less. Although the lower limit is not limited, an enormous cost is required to reduce the N content to be 0.0005% or less. Therefore, the lower limit is about 0.0005%.

Other elements that can be added will be described.

To obtain the objects described below, the steel sheet to be processed according to the present embodiment further may optionally include one or more elements selected from B: 0.0002% or more and 0.0050% or less, Nb: 0.005% or more and 0.100% or less, Ti: 0.005% or more and 0.200% or less, Cr: 0.005% or more and 1.000% or less, Mo: 0.005% or more and 1.000% or less, Cu: 0.005% or more and 1.000% or less, Ni: 0.005% or more and 1.000% or less, Sb: 0.001% or more and 0.200% or less, Zr: 0.005% or more and 0.100% or less, V: 0.005% or more and 0.200% or less, W: 0.005% or more and 0.100% or less, Sn: 0.001% or more and 0.200% or less, Ca: 0.0002% or more and 0.0050% or less, REM: 0.0002% or more and 0.0050% or less, and Mg: 0.0002% or more and 0.0050% or less.

When these elements are added, appropriate contents of the elements and the reasons for limiting the contents are as follows.

· B: 0.0002% or more and 0.0050% or less

When the B content is 0.0002% or more, the effect of promoting quenching is obtained. On the other hand, when the B content exceeds 0.0050%, castability and chemical convertibility deteriorate. Accordingly, when B is included, the B content may be 0.0002% or more and 0.0050% or less. The B content is preferably 0.0005% or more from the viewpoint of sufficiently obtaining the effect of promoting quenching, and is preferably 0.0025% or less from the viewpoint of reducing the amount of inclusions.

· Nb: 0.005% or more and 0.100% or less

When the Nb content is 0.005% or more, the effect of adjusting the strength (improving the strength) is obtained. On the other hand, when the Nb content exceeds 0.100%, the cost increases. In addition, the amount of inclusions increases such that castability and the ductility of the steel sheet deteriorate. Accordingly, when Nb is included, the Nb content may be 0.005% or more and 0.100% or less. From the viewpoint of obtaining an effect of refining the microstructure to increase the strength and from the viewpoint of improving delayed fracture resistance, it is more preferable to add 0.01% or more of Nb. In addition, from the viewpoint of reducing the amount of inclusions, the Nb content is more preferably 0.06% or less.

· Ti: 0.005% or more and 0.200% or less

When the Ti content is 0.005% or more, the effect of adjusting the strength (improving the strength) is obtained. On the other hand, when the Ti content exceeds 0.200%, the amount of inclusions increases, which deteriorates castability and the ductility of the steel sheet. In addition, chemical convertibility deteriorates. Accordingly, when Ti is included, the Ti content may be 0.005% or more and 0.200% or less. From the viewpoint of obtaining an effect of refining the microstructure to increase the strength and from the viewpoint of improving delayed fracture resistance, it is more preferable to add 0.01% or more of Ti. In addition, from the viewpoint of reducing the amount of inclusions, the Ti content is more preferably 0.15% or less.

· Cr: 0.005% or more and 1.000% or less

When the Cr content is 0.005% or more, the quenching effect is obtained. On the other hand, when the Cr content exceeds 1.000%, Cr is rich on the surface, and thus chemical convertibility, plating properties, and weldability deteriorate. Accordingly, when Cr is included, the Cr content may be 0.005% or more and 1.000% or less.

· Mo: 0.005% or more and 1.000% or less

When the Mo content is 0.005% or more, the effect of adjusting the strength (improving the strength) is obtained. On the other hand, when the Mo content exceeds 1.000%, chemical convertibility deteriorates or the cost increases. Accordingly, when Mo is included, the Mo content may be 0.0005% or more and 1.000% or less.

· Cu: 0.005% or more and 1.000% or less

When the Cu content is 0.005% or more, the effect of improving the delayed fracture resistance can be obtained. On the other hand, when the Cu content exceeds 1.000%, chemical convertibility deteriorates or the cost increases. Accordingly, when Cu is included, the Cu content may be 0.005% or more and 1.000% or less. From the viewpoint of improving delayed fracture resistance, it is more preferable to add 0.05% or more of Cu. In addition, from the viewpoint of preventing deterioration of chemical convertibility, the Cu content is more preferably 0.2% or less.

· Ni: 0.005% or more and 1.000% or less

When the Ni content is 0.005% or more, the effect of promoting formation of residual $\gamma$ phase is obtained. On the other hand, when the Ni content exceeds 1.000%, the cost increases. Accordingly, when Ni is included, the Ni content may be 0.005% or more and 1.000% or less.

· Sb: 0.001% or more and 0.200% or less

Sb can be included from the viewpoint of suppressing nitridization and oxidation of the steel sheet surface or decarburization of a region having a size of several tens of microns on the steel sheet surface caused by oxidation. By suppressing nitridization or oxidation, a decrease in the amount of martensite formed on the steel sheet surface is prevented, and fatigue properties and surface quality are improved. This effect is obtained when Sb: 0.001% or more. On the other hand, when Sb: 0.200% is exceeded, toughness deteriorates. Accordingly, when Sb is included, the Sb content may be 0.001% or more and 0.200% or less. It is preferable to add 0.002% or more of Sb from the viewpoint of improving fatigue resistance, and it is more preferable to add 0.100% or less of Sb from the viewpoint of obtaining high toughness.

· Zr: 0.005% or more and 0.100% or less

When the Zr content is 0.005% or more, the effect of increasing the strength is obtained. On the other hand, when the Zr content exceeds 0.100%, the amount of inclusions increases, which deteriorates castability and the ductility of the steel sheet. Accordingly, when Zr is included, the Zr content may be 0.005% or more and 0.100% or less.

· V: 0.005% or more and 0.200% or less

When the V content is 0.005% or more, the effect of increasing the strength is obtained. On the other hand, when the V content exceeds 0.200%, the amount of inclusions increases, which deteriorates castability and the ductility of the steel sheet. Accordingly, when V is included, the V content may be 0.005% or more and 0.200% or less.

· W: 0.005% or more and 0.100% or less

When the W content is 0.005% or more, the effect of increasing the strength is obtained. On the other hand, when the W content exceeds 0.100%, the amount of inclusions increases, which deteriorates castability and the ductility of the steel sheet. Accordingly, when W is included, the W content may be 0.005% or more and 0.100% or less.

· Sn: 0.001% or more and 0.200% or less

Sn can be included from the viewpoint of suppressing nitridization and oxidation of the steel sheet surface or decarburization of a region having a size of several tens of microns on the steel sheet surface caused by oxidation. By suppressing nitridization or oxidation, a decrease in the amount of martensite formed on the steel sheet surface is prevented. As a result, fatigue properties and surface quality are improved. This effect is obtained when Sn: 0.001% or more. On the other hand, when Sn: 0.200% is exceeded, toughness deteriorates. Accordingly, when Sn is included, the Sn content may be 0.001% or more and 0.200% or less. It is preferable to add 0.002% or more of Sn from the viewpoint of improving fatigue resistance, and it is more preferable to add 0.100% or less of Sn from the viewpoint of obtaining high toughness.

· Ca: 0.0002% or more and 0.0050% or less

Ca has an effect of spheroidizing the morphology of inclusions to improve bendability and delayed fracture resistance. From the viewpoint of obtaining this effect, 0.0002% or more of Ca can be added. However, addition of a large amount of Ca leads to an increase in cost. Therefore, the Ca content preferably is 0.0050% or less.

· Rare Earth Metal (REM): 0.0002% or more and 0.0050% or less

REM has an effect of spheroidizing the morphology of inclusions to improve bendability and delayed fracture resistance. From the viewpoint of obtaining this effect, 0.0002% or more of REM can be added. However, addition of a large amount of REM leads to an increase in cost. Accordingly, the REM content is preferably 0.0050% or less.

· Mg: 0.0002% or more and 0.0050% or less

Mg has an effect of spheroidizing the morphology of inclusions to improve bendability and delayed fracture resistance. From the viewpoint of obtaining this effect, it is preferable to add 0.0002% or more of Mg. However, addition of a large amount of Mg leads to an increase in cost. Therefore, the Mg content preferably is 0.0050% or less.

The steel sheet having the chemical composition described above can be produced using a well-known method or any method. For example, slab having the above-described chemical composition can be heated and hot-rolled to obtain a hot-rolled steel sheet, and the hot-rolled steel sheet can be pickled and then, as necessary, can be cold-rolled to obtain a cold-rolled steel sheet. Further, the surface treatment described above may also be executed on the steel sheet surface.

"First Embodiment"

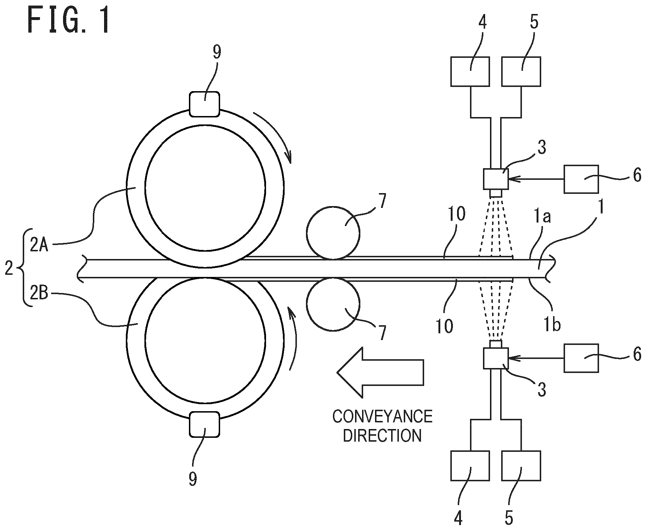

FIG. 1 is a diagram illustrating a configuration of a trimming device provided in trimmer equipment.

As illustrated in FIG. 1, in the present embodiment, a steel sheet 1 on which plating and other surface treatments are performed is conveyed to the trimmer equipment along a conveyance line, and a trimming process is executed on an sheet width direction end part (edge part) of the steel sheet 1 that is being conveyed.

(Configuration)

The trimming device according to the present embodiment includes at least one rotary blade 2, press rolls 7, and a lubricating oil adhesion device. In addition, the trimming device according to the present embodiment includes a film thickness uniformization tool. Either of the press rolls 7 or the film thickness uniformization tool does not need to be provided. In the present embodiment, the press rolls 7 function as the film thickness uniformization tool.

<Rotary Blade 2>

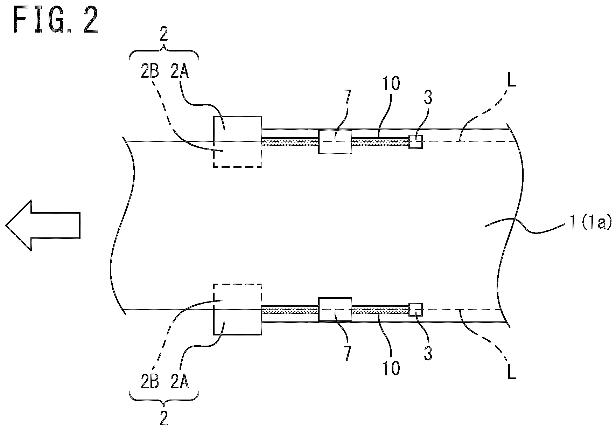

As illustrated in FIGS. 1 and 2, the rotary blade 2 includes a pair of rotary blades 2A and 2B (an upper blade 2A and a lower blade 2B) capable of facing each other with respect to the steel sheet 1 and is configured to cut the steel sheet 1 in a state where the steel sheet 1 is interposed between the pair of rotary blades 2A and 2B in a sheet thickness direction. As illustrated in FIG. 2, a contact position between blade edges of the pair of rotary blades 2A and 2B is a cutting position.

Reference numeral L in FIG. 2 represents a position of the steel sheet 1 before cutting, which is assumed to pass through the cutting position. Reference numeral 10 in FIGS. 1 and 2 represents a lubricating oil adhered to the steel sheet 1 by the lubricating oil adhesion device.

As illustrated in FIG. 1, the pair of rotary blades 2A and 2B is set in a forward direction in which a rotation direction at the cutting position is the same as a conveyance direction.

The rotary blade 2 executes a trimming process of cutting an edge part (end part) of the steel sheet 1 according to a product width before outgoing inspection, for example.

<Lubricating Oil Adhesion Device>

As illustrated in FIG. 1, the lubricating oil adhesion device is disposed at an upstream position of an installation position of the rotary blade 2 in the steel sheet conveyance direction, that is, at a position capable of facing surfaces 1a and 1b of the steel sheet 1 before cutting. As illustrated in FIG. 2, the lubricating oil adhesion device is a device that adheres a lubricating oil 10 in advance to a region including a position (position of a reference numeral L) where the steel sheet 1 is cut with the rotary blade 2 on the surfaces 1a and 1b of the steel sheet 1.

The lubricating oil adhesion device according to the present embodiment includes a spray device 3 (spray nozzle), and the spray device 3 sprays the lubricating oil to the surfaces 1a and 1b of the steel sheet 1 to adhere the lubricating oil to the surfaces 1a and 1b of the steel sheet 1. An oil tank 4 that stores the lubricating oil and a compressor or another air supply device 5 configured to supply air are connected to the spray device 3. The spray device 3 is configured to mix air with the lubricating oil at a nozzle tip portion to form the lubricating oil into a mist form according to an instruction from a controller 6 and to spray the lubricating oil in the mist form to the surfaces 1a and 1b of the steel sheet 1.

[Water Content in Lubricating Oil]

The water content in the lubricating oil is preferably less than 3000 ppm.

The lubricating oil may remain adhered to the end part of the steel sheet cut with the rotary blade 2. When the water content in the adhered lubricating oil is high at 3000 ppm or more, there is a risk that a flat surface or cut surface of the steel sheet may get rust due to water in the lubricating oil in a period between cutting with the rotary blade 2 and production processes in an automotive manufacturer, a home electric appliance manufacturer, or the like. This makes it difficult to apply the present embodiment to the production of the steel sheet for an automobile or a home electric appliance.

In contrast, by adjusting the water content in the lubricating oil to be less than 3000 ppm, the occurrence of rust on the flat surface or the cut surface of the steel sheet can be suppressed.

From the viewpoint of suppressing the occurrence of rust over a long period of time, the water content in the lubricating oil is more preferably 2000 ppm or less.

In addition, the lower limit of the water content in the lubricating oil is 0 ppm. In consideration of the cost required for dehydration, the lower limit of the water content in the lubricating oil is preferably 20 ppm or more.

In the present specification "ppm" represents weight ppm.

[Spray Amount]

The spray amount of oil has the same definition as the adhesion amount of oil on the steel sheet surface.

In a manufacturer that processes a steel sheet for an automobile production industry or the like, for example, the steel sheet or a blank material trimmed from the steel sheet is pressed, and subsequently a cleaning step of degreasing the oil (pressing oil or anti-rust oil) adhered to the steel sheet with alkaline cleaning liquid is provided before a chemical conversion and electrodeposition coating step. At this time, as the adhesion amount of the oil increases, degreasing properties in the degreasing step significantly deteriorate, which adversely affects chemical convertibility and coating properties. Accordingly, it is difficult to produce the steel sheet for this use using a method of directly applying oil to a rotary blade to cut the steel sheet as in the related art because the supply of a larger amount of cutting oil causes excessive transfer of the oil from the rotary blade to the steel sheet, which brings about poor degreasing.

In contrast, according to various investigations by the present inventors, it was newly found that, when the method of directly applying (adhering) the lubricating oil to a non-trimmed steel sheet to cut the steel sheet is adopted, the following effects can be obtained.

That is, the present inventors found that, assuming that the supply amount of the lubricating oil to the steel sheet is the same, when the lubricating oil is directly supplied (adhered) to the steel sheet for cutting, the frequency of blade chipping is suppressed as compared to a case where the lubricating oil is directly applied to the rotary blade for trimming.

The reason for this is not entirely clear but is presumed to be that a new mechanism configured to hold the oil with the blade edge is provided as described below.

That is, when the lubricating oil is directly applied to the rotary blade as in the related art, the lubricating oil is not newly supplied after the blade comes into contact with the steel sheet. Therefore, the lack of the oil in the blade edge cannot be suppressed in a process where the steel sheet is deformed and cut while a corner portion of the blade, that is, a blade edge slidably contacts the steel sheet. Therefore, in this process, it is presumed that a lateral force generated by friction between the steel sheet and the blade strongly acts on the blade.

In contrast, when the lubricating oil is directly applied (adhered) to the non-trimmed steel sheet, in a process of bringing the blade into contact with the steel sheet and subsequently slidably contacting the blade edge on the steel sheet surface for cutting, the applied (adhered) lubricating oil is also present in a new region of the steel sheet surface in front of the sliding region of the blade edge. Therefore, the lubricating oil is continuously supplied. As a result, it is considered that the lack of the oil is suppressed and the friction between the steel sheet and the blade is reduced such that blade chipping is significantly suppressed when the lubricating oil is directly applied (adhered) to the steel sheet. In addition, the oil that is locally deposited between the blade edge and the steel sheet in the slidably contacting process is present on the chip side that is trimmed and removed, and thus poor degreasing caused by the deposited oil is not likely to occur.

From the above, when the lubricating oil is directly applied (adhered) to the steel sheet, the amount of the lubricating oil supplied to the steel sheet for trimming can be suppressed as compared to a case where the oil is directly applied to the rotary blade.

When a large amount of the oil is applied to the entire steel sheet, a large amount of the lubricating oil should be removed in a degreasing line, and the frequency of replacing chemical liquid significantly increases. Therefore, it is very difficult to practically implement the method from the viewpoint of cost or line productivity. In addition, when the lubricating oil is applied to the entire steel sheet, the burden on the global environment also significantly increases. With the cutting method according to the present disclosure, a significant effect can be obtained by applying the lubricating oil to only the region near the rotary blade, and thus the problem can also be solved.

That is, by applying the present embodiment, it is not necessary to apply (adhere) a large amount of the oil to obtain the significant effect of suppressing blade chipping. As a result, there is an advantageous effect in that the effect is obtained with the adhesion amount of the oil within a range where degreasing properties requested from an automotive manufacturer do not deteriorate.

This way, according to the present disclosure, the frequency of the blade chipping is suppressed with a smaller adhesion amount of the lubricating oil, as compared with the method of directly applying the oil to the rotary blade to cut the steel sheet. As a result, it was found that the present disclosure has an advantageous effect in that the present disclosure is applicable to automotive frame and body parts and the like, and is also excellent from the viewpoint of environmental protection. In addition, according to the present disclosure, it is possible to prevent scattering and to limit the adhesion region of the lubricating oil to the steel sheet.

Here, the spray amount of the lubricating oil such as the oil flow rate is adjusted such that the lubricating oil can be continuously and uniformly applied (adhered) to the edge parts of the surfaces 1a and 1b of the steel sheet 1.

For example, the spray amount is set to satisfy the following Expression (1) to ensure a certain level or higher of oil application density to the surfaces 1a and 1b of the steel sheet 1.

That is, the lower limit value of the spray amount is set to satisfy, for example, the following Expression (1) according to a conveying rate of the steel sheet. It is more preferable that the lower limit value of the spray amount is set by Expression (2).

Lower Limit Value of Spray Amount = 1.00 [mL/m$^2$] $\times$ 0.04 (Width of Spray Region) [m] --> $\times$ Conveying Rate [mpm] $\times$ 60 [min/hr] (1)

Lower Limit Value of Spray Amount = 7.24 [mL/m$^2$] $\times$ 0.04 (Width of Spray Region) [m] $\times$ Conveying Rate [mpm] $\times$ 60 [min/hr]　　　　(2)

By setting the spray amount to be more than or equal to the value defined by Expression (1) per single surface, the excellent effect of suppressing blade chipping can be obtained. The lower limit value of the spray amount defined by Expression (1) corresponds to an oil application density of 1.00 mL/m$^2$. The oil application density is the adhesion amount of the lubricating oil on the steel sheet surface per unit area. Further, by setting the spray amount to be more than or equal to the value defined by Expression (2), the excellent effect of suppressing blade chipping can be obtained. Therefore, it is preferable that the lower limit value of the spray amount is in this range. The lower limit value of the spray amount defined by Expression (2) corresponds to an oil application density of 7.24 mL/m$^2$. It is preferable that the above-described oil application density is satisfied on a steel sheet surface on the upper blade side (upper surface) that is an initial occurrence position of blade chipping. It is more preferable that the above-described oil application density is satisfied on both steel sheet surfaces on the upper blade side and the lower blade side.

Here, the definition in Expression (1) and Expression (2) is based on the assumption that the width of the spray region (adhesion region) is in a range of 0.04 m from the steel sheet edge part. When the widths are different from each other, the spray amount can be obtained by substituting the value for 0.04 m. Here, [mpm] is a passing distance (m) of the steel sheet per minute.

Assuming that the width of the spray region is 0.01 m and the conveying rate is 40 mpm, the spray amount is 0.02 L/hr in Expression (1) and is 0.17 L/hr in Expression (2). These values can be considered as the lower limit value of the spray amount when blade chipping is sufficiently suppressed and a lower limit value of the spray amount when blade chipping is more sufficiently suppressed, respectively. The values in terms of the oil application density are as described above.

The upper limit value of the spray amount is not particularly limited.

Note that, in the case of excessive oil application, the oil 10 adhered to the edge part of the steel sheet 1 falls from the steel sheet, which may adversely affect the equipment in subsequent production lines. Therefore, it is desirable that the spray amount is as small as possible. From this viewpoint, it is desirable that the total spray amount of the lubricating oil on both surfaces is less than 60 L/hr. The reasons for adjusting the total spray amount on both surfaces as described above are that the oil flows out from both of the upper and lower surfaces and that the oil on both of the surfaces is integrated and flow out in the case of a coil. The total spray amount of less than 60 L/hr on both of the surfaces corresponds to an oil application density of less than 15 mL/m$^2$ per single surface when the lubricating oil is sprayed to both of the surfaces. When the oil is sprayed to only a single surface, the spray amount of less than 60 L/hr corresponds to an oil application density of less than 30 mL/m$^2$. Here, it is assumed that the width of the spray region is 0.15 m and the conveying rate of the steel sheet is 230 mpm. These conditions correspond to the upper limits of the width of the spray region and the conveying rate of the steel sheet.

In addition, from the viewpoint of ensuring excellent degreasing properties required for an automotive steel sheet, the oil application density is preferably 10 mL/m$^2$ or less. The reason for this is that the degreasing time is significantly affected by the oil application density. The oil application density of 10 mL/m$^2$ or less corresponds to a spray amount of the lubricating oil of 20 L/hr or less in the case of the single-surface spraying, and corresponds to a spray amount of the lubricating oil of 40 L/hr or less in the case of the both-surface spraying. Here, the spray amount of the lubricating oil is calculated assuming that the width of the spray region is 0.15 m and the conveying rate of the steel sheet is 230 mpm. From the viewpoint of ensuring excellent degreasing properties, the oil application density is more preferably 5 mL/m$^2$ or less. The oil application density of 5 mL/m$^2$ or less corresponds to a spray amount of the lubricating oil of 10 L/hr or less in the case of the single-surface spraying, and corresponds to a spray amount of the lubricating oil of 20 L/hr or less in the case of the both-surface spraying. By controlling the oil application density to be in the above-described range, the time required for the degreasing process performed in an automotive manufacturer or the like can be reduced.

In this embodiment, the lubricating oil is supplied in a mist form without being sprayed as it is. Therefore, the supply of the lubricating oil is naturally suppressed.

When the application (adherence) of the lubricating oil is executed by dropping, the range of the dropping amount is the same as the range in the case of the spraying. In the case of the dropping, (the width of the spray region) in Expression (1) or Expression (2) may be replaced with (the width of the dropping region) for the calculation.

[Spray Pressure]

The spray pressure is, for example, 0.09 MPa or more and 0.12 MPa or less.

The spray pressure is not particularly limited as long as it is set such that the oil can be uniformly applied to the defined spray region.

[Spray Region]

It is preferable that the spray region has a region of $\pm 20$ mm in a width direction of the steel sheet 1 based on a position L as the cutting position.

When the width (spray width) of the spray region is 40 mm or less, a sufficient lubricating region cannot be ensured at the cutting position, and blade chipping may occur.

The upper limit value of the width of the spray region is not particularly limited. Note that, in the case of excessive oil application, the oil 10 adhered to the edge part of the steel sheet 1 falls from the steel sheet, which may adversely affect the subsequent line equipment. Therefore, it is desirable that the width of the spray region is as small as possible.

When the produced steel sheet is applied to an automotive use, excellent degreasing properties are required from the viewpoints of improving a degreasing rate, reducing poor degreasing, reducing the frequency of replacing chemical liquid, and reducing the environmental burden. Therefore, it is desirable to minimize the width of the spray region. From this viewpoint, it is desirable that the width of the application region is $\pm 100$ mm (200 mm width) or less. In addition, the width of the spray region is preferably adjusted to be $\pm 40$ mm (80 mm width) or less by precisely controlling the lubricating oil application density to the steel sheet. Further, the width of the spray region is more preferably $\pm 20$ mm (40 mm width) or less, and still more preferably $\pm 10$ mm (20 mm width) or less.

[Distance between Spray Portion of Spray Device 3 and Steel Sheet 1]

A distance between the spray portion of the spray device 3 and the steel sheet 1 is preferably 40 mm or more. When the width is less than 40 mm, there is a risk that a nozzle portion of the spray device 3 may interfere with the steel sheet 1 when the steel sheet 1 having a deformed shape passes by the nozzle portion.

The upper limit value of the distance between the spray portion of the spray device 3 and the steel sheet 1 is not particularly limited. As the distance increases, the density of the lubricating oil (oil application density) adhered to the surfaces 1a and 1b of the steel sheet 1 decreases, and the width of the spray region increases. However, the upper limit value of the distance is not defined as long as the distance is within a range where the oil application density and the spray region can be ensured within a preset target range.

In the present embodiment, the spray nozzles are disposed to face the upper surface 1a and the lower surface 1b of the steel sheet 1, and are configured to adhere the lubricating oil to a position to be cut with the rotary blades 2 on both front and back surfaces of the steel sheet 1.

The spray nozzle may be disposed only on one surface among the front and back surfaces 1a and 1b of the steel sheet 1.

[Viscosity of Lubricating Oil]

It is desirable that a viscosity of the lubricating oil at 40°C is 3 mm$^2$/s or more and 130 mm$^2$/s or less. When the viscosity is less than 3 mm$^2$/s, the cut surface of the rotary blade and the steel sheet act on each other at a high surface pressure. Therefore, there is a risk that the rotary blade and the steel sheet may come into direct contact with each other due to the lack of the oil. During the cutting of a high-strength steel sheet having a strength of 1180 MPa or more, from the viewpoint of suppressing the lack of the oil even at a higher surface pressure, the viscosity of the lubricating oil at 40°C is more preferably 8 mm$^2$/s or more.

In addition, when the viscosity of the lubricating oil is more than 130 mm$^2$/s, the diffusion and penetration of the lubricating oil is insufficient on the steel sheet surface after the adhesion to the steel sheet surface, and there is a risk that the lubricating oil lacks locally. In addition, in the process of cutting the steel sheet with the rotary blade, the supply of the lubricating oil to a rotary blade side surface may be insufficient, and the rotary blade side surface and the steel sheet may come into direct contact with each other. Accordingly, the viscosity of the lubricating oil is preferably 130 mm$^2$/s or less. Further, from the viewpoint of more uniformly distributing the adhered oil, it is more preferable that the viscosity of the lubricating oil at 40°C is 100 mm$^2$/s or less. The measurement of the viscosity is in accordance with JIS Z8803. The viscosity can be measured with, for example, a rotating viscometer.

The kind of the lubricating oil is not particularly limited. Examples of the lubricating oil include a pressing oil, an anti-rust oil, and a cutting oil. From the viewpoint of stably suppressing blade chipping even when the high-strength steel sheet is cut, an extreme pressure additive can also be added to the lubricating oil.

[Particle Diameter of Lubricating Oil]

An average diameter of sprayed mist is, for example, in a range of 1 um or more and 2000 um or less. The lower limit of the average diameter of the mist is not particularly limited. Note that, when the particle diameter is too small, the mist is scattered to the surroundings and the adhesion ratio to the steel sheet decreases. In addition, the oil may be scattered to the surroundings to cause a risk from the viewpoint of disaster prevention. The upper limit of the average diameter of the mist is not also particularly limited. However, the adhesion amount may be non-uniform, and blade chipping is likely to occur. From the viewpoint of suppressing blade chipping, the average diameter of the mist is more preferably in a range of 100 um or less.

[Holding Time from Adhesion of Lubricating Oil to Steel Sheet to Start of Cutting]

A holding time from the adhesion of the lubricating oil to the steel sheet to the start of the cutting is not particularly limited. Note that, from the viewpoint of dispersing particles of the oil adhered to the steel sheet surface to obtain a uniform adhesion state, the holding time is preferably 1 second or longer. When the diameter of the particles of the adhered lubricating oil is large, the time required for the particles of the oil adhered to the steel sheet surface to be dispersed on the steel sheet surface to obtain a uniform adhesion state increases. Therefore, when the particle diameter of the lubricating oil exceeds 2000 $\mu$m, the holding time is desirably 3 seconds or longer.

[Constituent Material of Rotary Blade]

A constituent material of the rotary blade is not particularly limited. Examples of the constituent material of the rotary blade include carbon tool steel, alloy tool steel, and high speed tool steel. From the viewpoint of stably suppressing blade chipping during the cutting of a high-tensile steel sheet having a tensile strength of 1180 MPa or more, it is preferable to use alloy tool steel or high speed tool steel as the constituent material of the rotary blade. In addition, it is still more preferable that a surface hardening treatment such as a quenching treatment, nitridization and carburization, or a TD treatment or a surface coating treatment such as PVD, CVD, plating, and thermal spraying is performed on the surface of the rotary blade.

<Press Rolls 7>

The pair of press rolls 7 is disposed to be able to grip the steel sheet 1 in a state where the steel sheet 1 is interposed between the pair of press rolls 7.
The pair of press rolls 7 is set between the rotary blade 2 and the adhesion position of the lubricating oil by the lubricating oil adhesion device in the conveyance direction of the steel sheet 1.
A region of the steel sheet 1 gripped by the pair of press rolls 7 is set to include at least a position of the steel sheet 1 that is to be cut with the rotary blade 2.
This pair of press rolls 7 suppresses the vibration of the steel sheet 1 such that the cutting with the rotary blade 2 can be more stably executed.
In addition, the pair of press rolls 7 also has a function of pressing and pulling the lubricating oil 10 adhered to the steel sheet 1 toward the surfaces 1a and 1b of the steel sheet 1 to uniformize the adhered lubricating oil 10 and to increase the degree of adhesion to the steel sheet.

[Film Thickness Uniformization Tool]

The film thickness uniformization tool is disposed between the rotary blade and the adhesion position of the lubricating oil and uniformizes a film thickness of the lubricating oil adhering to the steel sheet surface.
That is, when the lubricating oil adhered by dropping or spraying is non-uniformly distributed, the film thickness uniformization tool uniformly adjusts the adhesion amount of the lubricating oil in the adhesion region of the lubricating oil, in particular, in the vicinity of the cutting position (10 to 100 mm width).
It is preferable that the film thickness uniformization tool uniformizes the film thickness after the adhesion of the lubricating oil to the steel sheet and before cutting the steel sheet with the rotary blade.
In the present embodiment, the film thickness uniformization tool is provided between the lubricating oil spray device and the rotary blade or between an oil dropping device and the rotary blade.
In the present embodiment, examples of the film thickness uniformization tool include the pair of press rolls 7.
As the film thickness uniformization tool, a brush can be used and a flat member or a roll-shaped member formed of one or more kinds of a felt, rubber, a resin, and a metal can be used. The film thickness uniformization tool may be fixed or may rotate or oscillate to further uniformize the film thickness of the lubricating oil. The film thickness uniformization tool may be configured to uniformize the adhesion amount of the lubricating oil to the steel sheet surface by pressing or scraping the surface of the lubricating oil.
The non-uniform distribution of the lubricating oil causes blade chipping. In contrast, the film thickness uniformization tool has an action of significantly suppressing blade chipping, and can stably suppress blade chipping. In addition, the non-uniform distribution of the lubricating oil causes deterioration of degreasing properties. However, the film thickness uniformization tool can suppress the non-uniform distribution of the lubricating oil.

<Other Configurations>

In the present embodiment, a felt 9 impregnated with the lubricating oil is provided. The felt 9 directly supplies the lubricating oil to the rotary blade 2. The lubricating oil is appropriately supplied to the felt 9. Since the lubricating oil directly supplied to the rotary blade 2 is scattered by the centrifugal force of the rotation of the rotary blade 2, it is preferable that the amount of the lubricating oil supplied by the spray device 3 is more than the amount of the lubricating oil supplied by the felt 9.

In the present embodiment, the felt 9 does not need to be provided.

[Clearance between Upper Blade 2A and Lower Blade 2B of Rotary Blade 2]

A clearance between the upper blade 2A and the lower blade 2B of the rotary blade 2 is preferably in a range of 5% or more and 19% or less with respect to the sheet thickness of the steel sheet 1. During the cutting of a high-tensile steel sheet having a tensile strength of 590 MPa or more, blade chipping is likely to occur at a clearance of about 20% where there has been no problem in a mild steel sheet in the related art. By controlling the clearance between the upper blade 2A and the lower blade 2B of the rotary blade 2 to be in a range of 5% or more and 19% or less, trimming blade chipping and the formation of iron powder caused by the trimming blade chipping are suppressed even during the cutting of a high-tensile steel sheet having a tensile strength of 590 MPa or more. As a result, pressing flaws in the process after the cutting are suppressed. From the viewpoint of suppressing blade chipping of a high-tensile steel sheet having a tensile strength of 980 MPa or more, the clearance between the upper blade 2A and the lower blade 2B of the rotary blade 2 is still more preferably in a range of 5% or more and 14% or less. Furthermore, from the viewpoint of suppressing blade chipping of a high-tensile steel sheet having a tensile strength of 1180 MPa or more, the clearance is more preferably in a range of 5% or more and 13% or less.

[Vertical Contact Angle of Upper Blade and Steel Sheet in Rotation Direction of Rotary Blade 2]

A vertical contact angle of the upper blade 2A and the steel sheet 1 in a rotation direction of the rotary blade 2 is preferably 3 degrees or more and 13 degrees or less. During the cutting of a high-tensile steel sheet having a tensile strength of 590 MPa or more, blade chipping is likely to occur at a contact angle of about 14 degrees where there has been no problem in a mild steel sheet in the related art. When the contact angle is more than 13 degrees, the contact area between the rotary blade 2 and the steel sheet 1 is reduced, and it is necessary to apply bending deformation to cut-out steel waste, which increases deformation resistance. As a result, during the cutting of the high-tensile steel sheet, extremely high stress concentrates on the blade edge of the rotary blade 2, which may lead blade chipping. When the contact angle is less than 3 degrees, a sufficient cutting depth in the sheet thickness direction cannot be ensured, and inappropriate cutting occurs. By controlling the contact angle to be in a range of 3 degrees or more and 13 degrees or less, even during the cutting of a high-tensile steel sheet having a tensile strength of 590 MPa or more, blade chipping of the rotary blade 2 and the formation of iron powder caused by the blade chipping are suppressed, and pressing flaws are suppressed.

[Angle between Rotation Direction of Rotary Blade 2 and Conveyance Direction of Steel Sheet]

An angle between the rotation direction of the rotary blade 2 and the conveyance direction of the steel sheet is preferably 0.01 degrees or more and 0.5 degrees or less in a direction in which the angle is an opening angle toward a conveyance backward side. During the cutting of a high-tensile steel sheet having a tensile strength of 590 MPa or more, a high surface pressure is generated due to recontact between the rotary blade 2 and the cut end surface of the steel sheet 1, and thus the deposition of materials adhered to the blade edge is likely to occur. When the deposition of materials adhered to the blade edge occurs, a large stress is applied to the blade edge due to local narrowing of the clearance, which causes blade chipping. From the viewpoint of avoiding this phenomenon, the angle between the rotation direction of the rotary blade 2 and the conveyance direction of the steel sheet 1 is preferably 0.01 degrees or more and 0.5 degrees or less in the direction in which the angle is the opening angle toward the conveyance backward side.

(Modification Example)

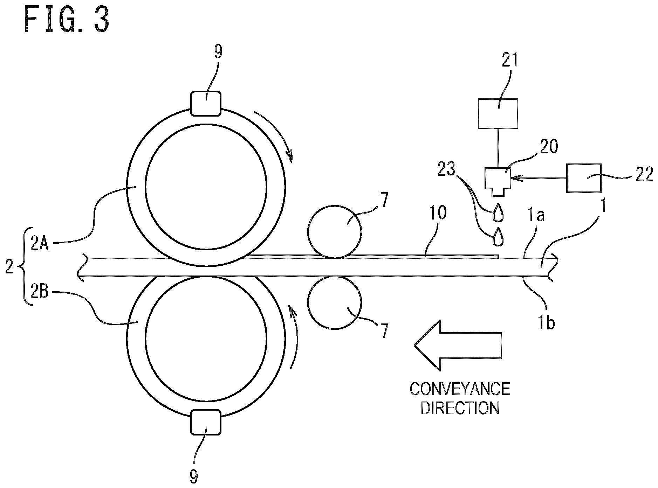

    (1) In the above description, the case where the lubricating oil adhesion device is configured with the spray device 3 has been described as the example. Another example of the lubricating oil adhesion device will be described with reference to FIG. 3.

The lubricating oil adhesion device illustrated in FIG. 3 includes an oil dropping device 20, and is configured to continuously drop oil droplets of the lubricating oil supplied from a reserve tank 21 to the upper surface 1a of the steel sheet 1 according to an instruction from a controller 22. The lubricating oil cannot be dropped to the lower surface 1b of the steel sheet 1. Accordingly, it is more preferable that the spray device 3 is disposed to face the lower surface 1b of the steel sheet 1 and the lubricating oil is sprayed to the lower surface 1b.

The oil droplets 23 dropped to the surface 1b of the steel sheet 1 along the conveyance direction are to be spread by the press rolls 7, and the oil droplets adhered to the steel sheet 1 are uniformized along the conveyance direction.

(2) In addition, the lubricating oil adhesion device may include a brush, and may be configured to adhere the lubricating oil to the steel sheet 1 with the brush.

Note that, in the case of the application with the brush, unlike the spray device 3 that supplies the lubricating oil 10 in a non-contact manner, the brush comes into direct contact with the surfaces 1a and 1b of the steel sheet 1. Therefore, in the case of the application with the brush, it is difficult to apply the brush to a steel sheet production line where the steel sheet 1 is conveyed at a high speed and vibrates. For example, when the application with the brush is applied, there is a problem in that, for example, the line needs to be stopped during the application and a worker needs to enter the line.

(3) In addition, the lubricating oil adhesion device may be a flat member or a roll-shaped member formed of one kind or two or more of a felt, rubber, a resin, and a metal. A configuration where the lubricating oil is adhered to the steel sheet 1 after being adhered to the flat member or the roll-shaped member may also be adopted. The lubricating oil adhesion device may be fixed or may rotate or oscillate to further uniformize the adhesion of the oil.

For example, when the lubricating oil adhesion device has a roll shape, the press rolls 7 can also be used as the lubricating oil adhesion device. By adhering the lubricating oil to outer peripheral surfaces of the press rolls 7 to supply the lubricating oil to the steel sheet, both of the function as the press roll and the function as the lubricating oil adhesion device described above can be exhibited.

(4) Further, a lubricating oil removing device that removes the surplus lubricating oil may be provided at a position before or after the installation position of the rotary blade in the conveyance direction of the steel sheet. In this case, the adhesion amount of the lubricating oil can be adjusted by removing a part of the lubricating oil adhered to the steel sheet before or after the cutting with the rotary blade.

For example, when the produced steel sheet is used for a use such as an automobiles where excellent degreasing properties are required, from the viewpoint of suppressing trimming blade chipping, it is preferable that, after adhering the lubricating oil at $10 \, \text{mL/m}^2$ or more, the adhesion amount of the lubricating oil is adjusted to be $10 \, \text{mL/m}^2$ or less by the lubricating oil removing device. Note that, in this case, the lubricating oil removing device is required, which causes an increase in cost.

(5) Further, the removed lubricating oil may be circulated to the lubricating oil adhesion device and reused.

(Rolled Steel Sheet, Coiled Material, and Blank Material)

Next, a rolled steel sheet and the like according to the present embodiment based on the present disclosure will be described.

The steel sheet production method according to the present embodiment is a technology suitable for producing a rolled steel sheet.

The rolled steel sheet according to the present embodiment is produced by equipment including a rolling step of rolling a slab with a rolling mill and the above-described cutting step, and has a strip shape. Hereinafter, the rolled steel sheet will be also simply referred to as the steel sheet.

Here, in the cutting method described above, the oil is applied to a steel sheet position to be cut before the cutting with the rotary blade 2. An end surface of the steel sheet in a steel sheet width direction cut by the cutting method according to the present embodiment is a smooth cut end surface. In the present embodiment, this portion of the smooth cut end surface will be referred to as a first cut surface. The first cut surface has a defined configuration described below.

Here, the cut end surface formed in the steel sheet width direction is preferably the first cut surface over the entire length in a steel sheet longitudinal direction. Note that, in the cut end surface formed in the steel sheet width direction, a part thereof in the steel sheet longitudinal direction may be the first cut surface. For example, cut surfaces of a leading end part and a trailing end part of the steel sheet where a conveying rate during the cutting tends to be unsteady may not be the first cut surface. In addition, the part of the cut surface in the longitudinal direction may not be the first cut surface. For example, the part of the cut surface in the longitudinal direction may be an end surface portion that does not satisfy the definition of the first cut surface because the application amount of the oil is partially too small. Note that the first cut surface is preferably 50% or more, more preferably 70% or more, and further preferably 90% or more in the longitudinal direction with respect to the cut end surface formed in the steel sheet width direction.

In addition, a coiled material is obtained by winding the strip-shaped steel sheet in a roll shape using a winding device.

Further, a blank material for pressing is obtained by appropriately cutting a steel sheet obtained by pulling out of the above-described rolled steel sheet or the coiled material. In the blank material according to the present embodiment, at least one end surface of both end parts of the steel sheet in the width direction is formed of the first cut surface.

Here, the blade chipping of the rotary blade 2 depends on the steel sheet strength, set conditions, or the like, and the blade chipping thus occurs at a cut length of several hundreds of meters to several tens of thousands of meters. Therefore, from the viewpoint of improving productivity, a partial region to which the oil is not applied in a range of several hundreds of meters in the steel sheet longitudinal direction may be acceptable. Even when the partial region to which the oil is not applied is present, due to the presence of the region satisfying the requirements of the present disclosure, the effect of suppressing the blade chipping, the effect of suppressing the pressing flaws caused by the blade chipping, and the effect of suppressing conveyance trouble, a poor coil winding shape, and a poor press dimension accuracy can be obtained.

In addition, from the viewpoint of sufficiently obtaining the above-described effects in the steel sheet or the coiled material, it is preferable that measurement is performed at three locations including a leading end (region of 5 to 10 m from a longitudinal leading end of the coiled material toward the center side), the longitudinal center, and a trailing end (region of 5 to 10 m from a longitudinal trailing end of the coiled material toward the center side), and that the following definition of the first cut surface is satisfied in a region of 50% or more. Here, a ratio between the regions is calculated such that a region interposed between pass positions is evaluated as pass, half of a region interposed between a pass position and a fail position is evaluated as pass, the remaining half of the same region is evaluated as fail, and a region interposed between fail positions is evaluated as fail. When the measurement at the above-described positions cannot be performed, the measurement is performed in an adjacent region.

In addition, in the case of the blank material, an end part in the width direction including the first cut surface is a straight edge and is parallel to a rolling direction. Furthermore, the blank material needs to satisfy the following definition of the first cut surface. The blank material is a flat sheet material because the blank material is assumed to undergo pressing. The length of the end surface formed of the first cut surface of the blank material is, for example, 100 mm to 2500 mm. For example, the blank material is a sheet material having a rectangular shape. Note that the blank material may have a punched hole such as a piercing hole.

In addition, the steel sheet according to the present embodiment is formed of a high-tensile steel sheet having a tensile strength TS of 590 MPa or more.

The above-described steel sheet may be any of a hot-rolled steel sheet, a cold-rolled steel sheet, a steel sheet obtained by performing a surface treatment on a hot-rolled steel sheet or a cold-rolled steel sheet, or a full hard material obtained by subjecting a hot-rolled steel sheet to cold rolling. The full hard material only needs to have a TS of 590 MPa or more in the trimming step instead of a strength after annealing that is performed after the trimming.

A surface treatment may be performed on the surface of the steel sheet according to the present embodiment. Examples of the steel sheet on which the surface treatment is performed include a GI, a GA, an EG, a CRS, a tin-plated steel sheet, a Zn-plated steel sheet, and an Al-plated steel sheet. However, the steel sheet is not limited to these examples and any steel sheet is applicable. The present disclosure is also applicable to, for example, a steel sheet obtained by applying a solid lubricant film is applied to a GI or a GA or a steel sheet including an organic coating. It is preferable that the above-described surface treatment is performed before the cutting process of the steel sheet edge part.

In the present embodiment, the sheet thickness of the steel sheet is desirably 0.4 mm or more where the cutting load increases such that blade chipping is likely to be visualized, and is more suitably 0.8 mm or more. In contrast, even when the sheet thickness is 4.0 mm or less, the effects of the present disclosure can be sufficiently obtained, too. Therefore, the range of the sheet thickness is also the range of the present invention.

[Shear Surface Ratio]

In the first cut surface as at least a part of the cut surface of the steel sheet in the steel sheet longitudinal direction, a shear surface ratio (%) is in a range of the following Expressions (3) to (6) according to the tensile strength TS (MPa) of the steel sheet.

<TS: 590 MPa or more and less than 980 MPa>

$$19 - 0.0146 \times TS \leq \text{the shear surface ratio} \leq 48 - 0.0300 \times TS \qquad \text{Expression (3)}$$

<TS: 980 MPa or more and less than 1180 MPa>

$$10 - 0.00526 \times TS \leq \text{the shear surface ratio} \leq 36 - 0.0180 \times TS \qquad \text{Expression (4)}$$

<TS: 1180 MPa or more and less than 1320 MPa> 10 - 0.00526 × TS ≤ the shear surface ratio ≤ 27 - 0,108 × TS                                          Expression (5)

<TS: 1320 MPa or more and less than 1850 MPa>

$$3 \leq \text{the shear surface ratio} \leq 16 - 0.0254 \times TS \ldots$$

Expression (6)

When the lubricating oil is applied to the rotary blade 2 without being directly applied to the steel sheet 1, the lack of the oil is likely to occur at the blade edge as described above, and thus a large frictional force occurs in the shear surface to cause large plastic deformation. Therefore, the cut surface has a fracture surface having a high shear surface ratio. The cut surface accompanied by this large plastic deformation has poor residual ductility. Therefore, the peeling of iron powder from the end surface is likely to occur in the process after the cutting step, and the peeled iron powder causes pressing flaws to increase the occurrence rate of surface defects. This becomes particularly obvious in a high-tensile steel sheet having a strength of 980 MPa grade or more, and becomes further obvious in a high-tensile steel sheet having a strength of 1180 MPa grade or more.

In contrast, when the lubricating oil is directly applied to the steel sheet and cut based on the present disclosure, the frictional force on the first cut surface is reduced in a high-tensile steel sheet having a strength in a wide range of 590 MPa grade or more.

Therefore, the present inventors found that, by applying the cutting method according to the present disclosure, the shear surface ratio on the first cut surface can be controlled to be in the ranges described in Expressions (1) to (4). As a result, in the steel sheet formed by applying the cutting method according to the embodiment of the present disclosure, and in the coiled material or blank material formed of the steel sheet, the peeling of iron powder from the end surface can be further suppressed as compared to the related art in the processes after cutting such as a conveying step, a rolling step, an annealing step, a steel sheet winding step, and the like, and pressing flaws caused by re-adhesion of the peeled iron powder in each of the step can be reduced.

The lower limits of the shear surface ratio of Expression (1) to (4) do not need to be limited from the viewpoint of suppressing the peeling of iron powder, and are lower limits obtained by the cutting method according to the embodiment of the present disclosure.

In addition, by controlling the shear surface ratio in the above-described range, the plastic flow of the material in the vertical direction of the end surface is suppressed. As a result, sagging and burrs can also be minimized, and a steel sheet having an end surface shape with high dimensional accuracy can be obtained. The steel sheet can prevent conveyance trouble and a poor winding shape in the steps after cutting such as a conveying step, a rolling step, an annealing step, and a steel sheet winding step. In addition, even in a pressing step in an automotive manufacturer, a poor dimension accuracy of pressed parts can be suppressed.

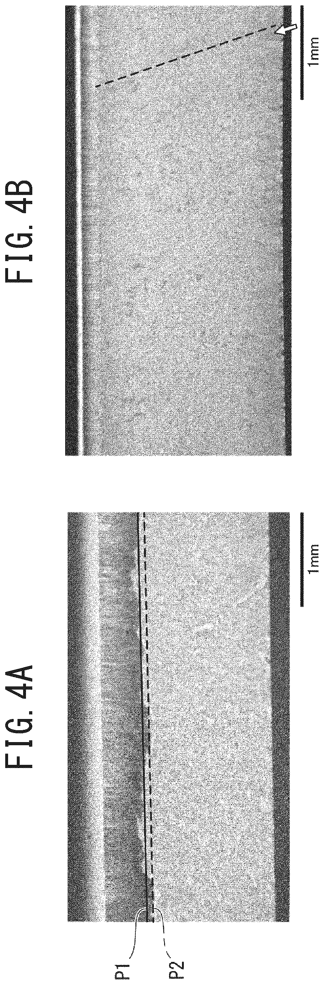

Here, as illustrated in FIGS. 4A and 4B, an area ratio of the shear surface of the cut surface is obtained by observing the cut surface with an SEM at a magnification at which a region in a range of 2 to 2.5 times the sheet thickness, and observing a length at which the total length in the rolling direction is 100 mm. A sample for observation may be dividedly collected, but is collected from a range having a length exceeding 150 mm in the rolling direction. The area ratio of the shear surface is a value obtained by dividing the measured total area of the shear surface by the total area of the shear surface and a fracture surface.

FIG. 4A illustrates a case of a related art example in which the lubricating oil is not directly applied to the steel sheet, in which P1 represents a center line of a boundary between the shear surface and the fracture surface, and P2 represents a line in which the position of P1 is shifted to the fracture surface side by "sheet thickness × 4%". In addition, FIG. 4B illustrates an example where the lubricating oil is applied to the steel sheet based on the present disclosure.

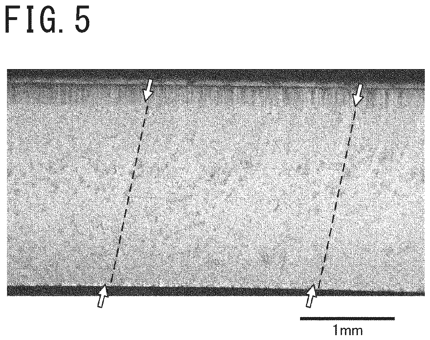

Here, in the case of blanking by a typical punching die, cutting by shear, or piercing by a blanking punch, a vertical angle between the cutting blade and the steel sheet is about 0 to 2 degrees. In contrast, during the cutting with the rotary blade 2 as in the present disclosure, the mechanism in which the steel sheet 1 is interposed between the rotary blades 2 having a certain curvature is provided. Therefore, the angle is generally more than that described above. In the present disclosure, it is desirable to control the angle to be 3 degrees or more and 13 degrees or less as described above. As a result, as indicated by an arrow and a broken line in FIG. 4B and FIG. 5, slight fringes corresponding to the angle at the time of cutting may appear in parallel to each other on the fracture surface of the cut surface. In the present disclosure, the occurrence of the fringes on the fracture surface is allowed, and an angle between the fringe direction and a side view in a steel sheet thickness direction is 3 degrees or more and 13 degrees or less. The angle between the fringe direction and the side view in the steel sheet thickness direction can be measured using the same method using an SEM as that of the measurement of the area ratio of the shear surface.

[Number of Protrusions present in boundary between Shear Surface and Fracture Surface]

The number of protrusions present in the boundary between the shear surface and the fracture surface in the first cut surface is 5 pieces/100 mm or less. The number of protrusions present in the boundary between the shear surface and the fracture surface in the first cut surface corresponds to the disorder status in the boundary between the shear surface and the fracture surface.

Here, when the lubricating oil is applied to the blade without being directly applied to the steel sheet, as described above, the lack of the oil is likely to occur at the blade edge, and blade chipping is likely to occur. In addition, the contact surface pressure between the steel sheet and the rotary blade increases, and thus a phenomenon in which a part of a newly formed surface of the cut steel sheet is likely to be adhered to the die is likely to occur. When blade chipping or adhesion occurs, a boundary line between the shear surface and the fracture surface of the cut end surface has a wavy shape (refer to FIG. 4A). In addition, when the boundary line has a wavy shape, the peeling of the iron powder is likely to occur from the portion, and the occurrence frequency of occurrence of pressing flaws is increased.

In contrast, since the number of protrusions present in the boundary between the shear surface and the fracture surface of the cut end surface is 5 pieces/100 mm or less (refer to FIGS. 4B and 5), the occurrence frequency of pressing flaws can be significantly suppressed.

When the boundary line is in a wavy region, sagging and burrs are likely to locally occur. As a result, in the coiled material having the above-described region, conveyance trouble is likely to occur, or a poor dimension accuracy of pressed parts is likely to occur in a pressing step in an automotive manufacturer. In the coiled material where the number of protrusions is controlled to be in the above-described range, these problems can be solved.

The number of protrusions can be measured using an SEM with the same magnification and observation length as those of the measurement of the shear surface ratio. In each observation field, the boundary line between the shear surface and the fracture surface is drawn with a straight line, and the number of shear surfaces that protrude from the boundary line to the fracture surface side by 4% or more of the sheet thickness is measured as the number of protrusions. That is, the protrusion has a shape protruding to the fracture surface side by 4% or more of the sheet thickness.

Regarding the position of the boundary line, a line substantially parallel to the upper end part of the shear surface is provided, and the height of the line is set such that the area of a shear surface positioned below the line and the area of a fracture surface positioned above the line are the same. The number of protrusions is a value obtained by dividing the total number of protrusions by the total length of the boundary observed.

The number of protrusions present in the boundary between the shear surface and the fracture surface in the cut end surface of the first cut surface can be controlled to be 5 pieces/100 mm or less by applying the cutting method according to the present disclosure. For example, it is preferable that the lubricating oil is directly applied to the non-trimmed steel sheet of the edge part at an oil application density of 0.900 g/m$^2$ or more (corresponding to an oil application density of 1.00 mL/m$^2$) and the clearance of the rotary blade 2 and the contact angle at the time of contact between the upper blade of the rotary blade 2 and the steel sheet 1 are adjusted. When the clearance of the rotary blade 2 is small, a secondary shear surface is formed, and the number of protrusions increases. When the clearance is large, the shear surface ratio increases, the wear of the tool is significant. When the cut length increases, blade chipping occurs at a high frequency, and the number of protrusions increases. When the contact angle between the rotary blade 2 and the steel sheet 1 is small, the range to be cut at the same time is widened, and the fracture surface morphology is unstable. In contrast, when the contact angle is large, a large bending deformation load is superimposed, and a large load is applied to the blade edge, which is likely to cause blade chipping. Therefore, the number of protrusions increases.

[Oil Application Amount in Region up to 5 mm from Cut Surface]

As described above, when the present disclosure is applied, blade chipping can be effectively suppressed by applying the lubricating oil to only the peripheral region (the vicinity of the region to be cut) of the rotary blade 2. Therefore, from the viewpoint of ensuring excellent degreasing properties, a steel sheet produced by applying a large amount of the lubricating oil to only the edge part for cutting is preferable. In addition, by allowing the oil application amount remaining in the vicinity of the first cut surface to be more than that remaining in the center portion in the steel sheet width direction, iron powder can be more effectively prevented from being peeled off and scattered in the edge part of the steel sheet 1 after the cutting. Accordingly, it is preferable that, in the cut end surface of the steel sheet 1, an oil application amount in a region up to 5 mm inward from the end surface of the first cut surface in a steel sheet width center direction is more than an oil application amount at a rolled steel sheet width center position by 0.2 g/m$^2$ or more. Here, the oil application amount refers to the adhesion amount per single surface.

It is preferable that the above-described control of the oil application amount is performed on at least a single surface among the front and back surfaces of the steel sheet. The effect of the occurrence of blade chipping is particularly large on the steel sheet surface on the upper blade side, that is, the steel sheet surface on the shear surface side as the upper surface. Therefore, it is preferable that the oil application amount at the edge part of the steel sheet surface on the upper blade side is set to be large. From the viewpoint of particularly stably suppressing blade chipping, it is preferable that the oil application amount at the edge part is set to be large on the steel sheet surfaces on both of the upper blade side and the lower blade side. Note that, from the viewpoint of reducing the frequency of replacing chemical liquid in the degreasing step, the oil application amount only on the steel sheet surface on the upper blade side can be set to be large without additionally applying the oil to the steel sheet surface on the lower blade side where the effect is small.

In general, the upper limit of the oil application of the steel sheet 1 is typically about 2.5 $g/m^2$. The oil application amount of the steel sheet surface in the region up to 5 mm from the end surface of the first cut surface position is preferably 2.7 $g/m^2$ or more. Here, the oil application amount refers to the adhesion amount per single surface. It is preferable that the above-described control of the oil application amount is performed on at least a single surface among the front and back surfaces of the steel sheet, and it is preferable that the oil application amount is controlled to be in the above-described range on the steel sheet surface on the shear surface side.

Further, from the viewpoint of further obtaining the effect of suppressing blade chipping, the spray amount of the lubricating oil is preferably 7.24 $mL/m^2$ or more during cutting. The spray amount of 7.24 $mL/m^2$ or more corresponds to an oil application amount of 6.5 $g/m^2$. Accordingly, the oil application amount in the region up to 5 mm from the first cut surface is more desirably 6.5 $g/m^2$ or more. Here, the oil application amount refers to the adhesion amount per single surface. It is preferable that the above-described control of the oil application amount is performed on at least a single surface among the front and back surfaces of the steel sheet, and it is preferable that the oil application amount is controlled to be in the above-described range on the steel sheet surface on the shear surface side.

In contrast, in the case of excessive oil application, there is a concern that the oil at the edge part falls and adversely affects the equipment of production lines. Therefore, the oil application amount of the steel sheet surface in the region up to 5 mm from the first cut surface is preferably less than 27 $g/m^2$ (corresponding to less than 30 $mL/m^2$). In addition, from the viewpoint of ensuring excellent degreasing properties required for an automotive steel sheet, the oil application amount in the region up to 5 mm from the first cut surface is desirably 9 $g/m^2$ or less (corresponding to 10 $mL/m^2$ or less). From the viewpoint of further reducing the degreasing time, the oil application amount in the region up to 5 mm from the first cut surface is more preferably 4.5 $mL/m^2$ or less (corresponding to 5 $mL/m^2$ or less). Here, the density of the oil is 0.9 $g/cm^3$.

The upper limit of the oil application amount at the rolled steel sheet width center position is about 2.5 $g/m^2$. Therefore, to adjust the oil application amount of the edge to be in the above-described range, the amount of increase from the oil application amount at the rolled steel sheet width center position to the oil application amount in the region up to 5 mm inward from the end surface of the first cut surface in the steel sheet width center direction is desirably less than 24.5 $g/m^2$, more desirably 6.5 $g/m^2$ or less, and still more desirably 2.0 $/m^2$ or less.

Here, the oil application amount is to be calculated by collecting six samples having a width of 5 mm and a length of 200 mm from each of the cut end surface and the steel sheet width center and measuring a weight change of each of the six samples before and after alkaline degreasing. When a sufficient amount of the sample cannot be ensured in the blank material, the film thickness can be measured and converted into the adhesion weight per unit area by setting the oil density to 0.9 $g/cm^3$.

(Action)

In the present embodiment, the insufficient supply of the oil at the cutting position is resolved by directly applying (adhering) the lubricating oil to the non-trimmed steel sheet 1. As a result, in the present embodiment, the frequency of blade chipping of the trimmer is suppressed by reducing the friction, and thus the yield of the steel sheet production is improved even when the rotary blade needs to rotate at a high speed for cutting.

For example, the spray device 3 is provided before the trimmer such that the oil can be continuously applied to the both of the front and back surfaces 1a and 1b of the steel sheet 1. By applying the oil to the cutting position of the non-cut steel sheet 1 to be cut using the spray device 3, insufficient oil penetration at the cutting position can be resolved. Therefore, even when the steel sheet 1 to be cut is the high-tensile steel sheet 1, a sufficient amount of the oil can be continuously and uniformly applied to the upper blade and the lower blade configuring the pair of rotary blades 2A and 2B. Therefore, insufficient oil penetration is resolved, and blade chipping is suppressed.

In addition, in the present embodiment, the amount of the lubricating oil applied to the steel sheet can be suppressed as compared to a case in which the lubricating oil is supplied to the rotary blade. Therefore, the occurrence of rust in the produced steel sheet can be suppressed as compared to a case where the lubricating oil is supplied to the rotating rotary blade.

Further, by spreading the oil with the press rolls 7, the oil can be more stably supplied to the cutting position.

Similarly, as illustrated in FIG. 3, the insufficient oil penetration at the cutting position can also be resolved by applying the oil to the end part of the non-trimmed steel sheet 1 using the oil dropping device 20. Therefore, even when the steel sheet 1 to be cut is the high-tensile steel sheet 1, a sufficient amount of the oil can be continuously and uniformly applied to the upper blade and the lower blade configuring the pair of rotary blades 2A and 2B. Therefore, insufficient oil penetration is resolved, and blade chipping is suppressed.

Here, regarding the spray amount or the dropping amount of the lubricating oil, it is preferable that a supply air pressure, an oil flow rate, and an oil consumption are set such that the lubricating oil can be continuously and uniformly applied (adhered) to both of the front and back surfaces of the steel sheet 1 in accordance with the conveying speed of the steel sheet.

In addition, in the rolled steel sheet, the coiled material, and the blank material having the first cut surface formed by the cutting method according to the embodiment of the present disclosure, the first cut surface having a smooth end surface is provided. Therefore, since the peeling of iron powder after the cutting is suppressed for the production as compared to the related art, the occurrence of pressing flaws caused by the peeling of the iron powder can be suppressed. That is, the rolled steel sheet, the coiled material, and the blank material with high quality can be provided.

(Examples)

Next, Examples based on the present embodiment will be described.

"First Example"

In the first example, a hot-dip galvanized steel sheet (tensile strength: 1180 MPa, sheet thickness: 1.2 mm) was used as the steel sheet 1 to be cut, and an experiment was performed on the occurrence status of the non-trimmed material (untrimmed material) on which the trimming was not performed in trimmer equipment.

The trimming was executed under the following conditions.

· Conveying rate of the steel sheet 1: maximum of 230 [mpm]
• Trimming allowance of sheet end part: 10 to 20 [mm]

<Example 1>

In Example 1, the above-described spray device 3 was used as the lubricating oil adhesion device (refer to FIG. 1).

Conditions of the spray device 3 were set as follows.

• Conveying rate of the steel sheet: 230 [mpm]
• Oil application range by the spray device 3: 40 [mm] from the end surface in the steel sheet width direction, only the upper surface
· Amount of oil used: 4.0 [L/hr] (oil application density: 7.25 [mL/m$^2$])
• Supply air pressure: 0.4 to 0.6 [MPa]

<Example 2>

In Example 2, the above-described oil dropping device 20 was used as the lubricating oil adhesion device (refer to FIG. 3).

Conditions of the oil dropping device 20 were set as follows.

• Conveying rate of the steel sheet: 80 [mpm]
• Oil application range: 40 mm from the end surface in the steel sheet width direction
• Amount of oil used: 0.8 [L/hr] (oil application density: 4.15 [mL/m$^2$])
• Supply air pressure: 0.4 to 0.6 [MPa]

<Example 3>

In Example 3, the above-described spray device 3 was used as the lubricating oil adhesion device (refer to FIG. 1).

Conditions of the spray device 3 were set as follows.

• Conveying rate of the steel sheet: 60 [mpm]
• Oil application range by the spray device 3: 40 [mm] from the end surface in the steel sheet width direction, only the upper surface
· Amount of oil used: 4.0 [L/hr] (oil application density: 14.0 [mL/m$^2$])
• Supply air pressure: 0.4 to 0.6 [MPa]
• Water content of oil: 700 ppm

Here, the steel sheet produced using the method according to Example 3 was wound to obtain a coiled material, the coiled material was stored in a warehouse for 100 days. Whether or not rust occurred in the lubricating oil adhesion region was verified, but no rust was observed.
The period of 100 days was set in consideration of a storage period where the coiled material was stored until the steel sheet was press-formed in a manufacturer such as an automotive manufacturer.

<Example 4>

In Example 4, the above-described spray device 3 was used as the lubricating oil adhesion device (refer to FIG. 1).
Conditions of the spray device 3 were set as follows.

· Conveying rate of the steel sheet: 40 [mpm]
· Oil application range by the spray device 3: 11 [mm] from the end surface in the steel sheet width direction, upper and lower surfaces
· Amount of oil used: 0.05 [L/hr] per single surface and 0.1 [L/hr] on both surfaces
(Oil application density: 1.88 [mL/m$^2$])
· Supply air pressure: 0.4 to 0.6 [MPa]
· Water content of oil: 700 ppm

Here, the steel sheet produced using the method according to Example 4 was wound to obtain a coiled material, the coiled material was stored in a warehouse for 100 days. Whether or not rust occurred in the lubricating oil adhesion region was verified, but no rust was observed.

<Example 5>

In Example 5, the above-described spray device 3 was used as the lubricating oil adhesion device (refer to FIG. 1).
Conditions of the spray device 3 were set as follows.

• Conveying rate of the steel sheet: 80 [mpm]
• Oil application range by the spray device 3: 80 [mm] from the end surface in the steel sheet width direction, only the upper surface
· Amount of oil used: 11.1 [L/hr] (oil application density: 29.0 [mL/m$^2$])
• Supply air pressure: 0.4 to 0.6 [MPa]
• Oil type: NOX-RUST550 (manufactured by Nihon Parkerizing Co., Ltd.)
· Viscosity of oil: 17.0 mm$^2$/s

<Example 6>

In Example 5, the above-described spray device 3 was used as the lubricating oil adhesion device (refer to FIG. 1).
Conditions of the spray device 3 were set as follows.

· Conveying rate of the steel sheet: 80 [mpm]
· Oil application range by the spray device 3: 15 [mm] from the end surface in the steel sheet width direction, upper and lower surfaces
· Amount of oil used: 0.58 [L/hr] per single surface and 1.16 [L/hr] on both surfaces
(Oil application density: 8.00 [mL/m$^2$])
· Supply air pressure: 0.4 to 0.6 [MPa]
· Oil type: NOX-RUST550 (manufactured by Nihon Parkerizing Co., Ltd.)
· Viscosity of oil: 17.0 mm$^2$/s (liquid temperature of lubricating oil: 40°C)
· Average particle diameter of mist after spraying the oil: 5.0 um

· Holding time from the adhesion of the oil to the steel sheet to the cutting: 1 second

<Comparative Example 1>

In Comparative Example 1, the lubricating oil adhesion device was not used. Instead, the lubricating oil was applied to the pair of rotary blades 2 by the felt 9 (regarding a disposition position of the felt 9, refer to FIG. 1).

In Comparative Example 1, the conveying rate of the steel sheet was set to 60 mpm, and the supply amount of the lubricating oil to the rotary blade was set to 4.0 L/hr in total on the upper blade and the lower blade. The application width was 12 mm (oil application density: 46.3 [mL/m$^2$] on each of the upper and lower blades.

<Evaluation>

The improvement of a product-defect rate was evaluated with the non-trimmed materials.

The product-defect rate is the proportion of the amount of defective non-trimmed materials (determined as defective materials) due to blade chipping (the total weight of defective coiled materials) in the amount of applied trim materials charged (the total weight of the produced 5 to 10 coiled materials).

The evaluation results are as follows.

| | |
|---|---|
| Comparative example 1 (in case of the oil application with only the felt 9) | 8.2% |
| Example 1 (in case of the oil spray) | 0.0% |
| Example 2 (in case of the oil dropping) | 7.1% |
| Example 3 (in case of the oil spray) | 0.0% |
| Example 4 (in case of the oil spray) | 0.0% |
| Example 5 (in case of the oil spray) | 0.0% |
| Example 6 (in case of the oil spray) | 0.0% |

As can be seen from this evaluation, in Examples 1 to 6 based on the present disclosure, the frequency of blade chipping of the trimmer was able to be suppressed as compared to Comparative Example 1. As a result, it was found that the yield of the steel sheet production can be improved with the present disclosure.

Here, when Example 2 was compared to Examples 1, 3, and 6, the reasons why the product-defect rate is poor are presumed to be the following two points.

That is, (1) since the oil dropping device 20 dropped the oil droplets, the oil was able to be applied to only the surfaces 1a and 1b, and blade chipping on the back surface (lower blade) was not reduced. (2) Since the oil dropping device 20 dropped the oil droplets, the oil was not able to be continuously applied (adhered), a load was applied to a portion of the blade to which the oil was not applied, and the blade chipping frequency on the surfaces 1a and 1b (upper blade) was significantly reduced but was not zero.

"Second Example"

Hereinafter, a second example will be described.

<Comparative Example 2>

In Comparative Example 2, the following was used as the steel sheet.

· Steel sheet: TS 1020 MPa, sheet thickness 1.8 mm Composition:

C: 0.09%, Si: 0.60%, Mn: 2.50%, P: 0.012%, S: 0.0013%, sol. Al: 0.045%, N: 0.0025%, Nb: 0.040%, Cr: 0.550%, Cu: 0.006%, Mo: 0.010%, Ni: 0.010%, Ti: 0.025%, B: 0.0016%, and the remainder being Fe and unavoidable impurities

In Comparative Example 2, the lubricating oil was directly applied to the pair of rotary blades 2 by the felt 9 without using the lubricating oil adhesion device.

Experiment conditions of Comparative Example 2 are as follows.

· Conveying rate of the steel sheet: 180 [mpm]
· Supply amount of the lubricating oil to the rotary blade: 6.0 [L/hr] in total on the upper blade and the lower blade
· Application width: 12 mm (oil application density: 23 [mL/m$^2$] on each of the upper and lower blades

· Oil application density at the steel sheet width center portion: 1.5 [g/m$^2$]
· Rotary blade diameter: φ300 mm
• Clearance of the rotary blade: 12% of the steel sheet thickness
· Overlap amount of the rotary blades: 0.3 mm
· Vertical contact angle between the upper blade and the steel sheet: 11 degrees
· Angle between the rotation direction of the rotary blade and the conveyance direction of the steel sheet: 0.15 degrees on the conveyance backward side
· Cutting position: 12 mm from the edge

<Example 7>

In Example 7, the following was used as the steel sheet.

· Steel sheet: TS 1020 MPa, sheet thickness 2.0 mm Composition:

C: 0.09%, Si: 0.60%, Mn: 2.50%, P: 0.012%, S: 0.0012%, sol. Al: 0.044%, N: 0.0026%, Nb: 0.040%, Cr: 0.550%, Cu: 0.006%, Mo: 0.010%, Ni: 0.010%, Ti: 0.025%, B: 0.0016%, and the remainder being Fe and unavoidable impurities
In addition, the above-described spray device 3 was used as the lubricating oil adhesion device (refer to FIG. 1).
In Example 7, conditions of the spray device 3 were set as follows, and the lubricating oil was applied before the trimming.

· Conveying rate of the steel sheet: 230 [mpm]
· Oil application range by the spray device 3: 20 [mm] from the end surface in the steel sheet width direction, only the upper surface
· Amount of oil used: 2.0 [L/hr] (oil application density: 7.25 [mL/m$^2$])
· Supply air pressure: 0.4 to 0.6 [MPa]
· Oil application density at the steel sheet width center portion: 1.5 [g/m$^2$]
· Oil application amount in a range of 5 mm from the edge: upper surface 4.9 [g/m$^2$], lower surface 1.5 [g/m$^2$]

A part (1.6 g/m$^2$) of the lubricating oil applied to the upper surface was removed after the trimming.

· Lubricating oil spray region: performed at both edges

With respect to the total length of 900 m, the leading end of 150 m and the trailing end of 150 m were not sprayed at the edge part.
The other region was sprayed except that (the oil application amount was the same as that of the center portion)

· Rotary blade diameter: φ300 mm
· Clearance of the rotary blade: 9% of the steel sheet thickness
· Overlap amount of the rotary blades: 0.3 mm
· Vertical contact angle between the upper blade and the steel sheet: 11 degrees
· Angle between the rotation direction of the rotary blade and the conveyance direction of the steel sheet: 0.15 degrees on the conveyance backward side
• Cutting position: 10 mm from the edge

<Example 8>

In Example 8, the following was used as the steel sheet.

· Steel sheet: TS 1220 MPa, sheet thickness 1.2 mm Composition:

C: 0.12%, Si: 0.45%, Mn: 2.50%, P: 0.008%, S: 0.0012%, sol. Al: 0.030%, N: 0.0020%, Nb: 0.040%, Cr: 0.400%, Cu: 0.010%, Mo: 0.010%, Ni: 0.010%, Ti: 0.017%, B: 0.0012%, and the remainder being Fe and unavoidable impurities
In addition, the above-described spray device 3 was used as the lubricating oil adhesion device (refer to FIG. 1).
In Example 8, conditions of the spray device 3 were set as follows, and the lubricating oil was applied before the trimming.

• Conveying rate of the steel sheet: 230 [mpm]

• Oil application range by the spray device 3: 20 [mm] from the end surface in the steel sheet width direction, only the upper surface

· Amount of oil used: 0.9 [L/hr] (oil application density: 2.8 [mL/m$^2$])

• Supply air pressure: 0.4 to 0.6 [MPa]

• Oil application amount at the steel sheet width center portion: 1.5 [g/m$^2$]

· Oil application amount in a range of 5 mm from the edge: upper surface 2.5 [g/m$^2$], lower surface 1.5 [g/m$^2$]

• Lubricating oil spray region: performed at the entire length, the upper surface, and both edges

• Rotary blade diameter: $\phi$300 mm

• Clearance of the rotary blade: 9% of the steel sheet thickness

• Overlap amount of the rotary blades: 0 mm

• Vertical contact angle between the upper blade and the steel sheet: 7 degrees

• Angle between the rotation direction of the rotary blade and the conveyance direction of the steel sheet: 0.09 degrees on the conveyance backward side

• Cutting position: 10 mm from the edge

<Example 9>

In Example 9, the following was used as the steel sheet.

· Steel sheet: TS 1480 MPa, sheet thickness 1.4 mm Composition:

C: 0.20%, Si: 0.95%, Mn: 3.20%, P: 0.008%, S: 0.0009%, sol. Al: 0.025%, N: 0.0020%, Nb: 0.013%, Cr: 0.050%, Cu: 0.150%, Mo: 0.100%, Ni: 0.080%, Ti: 0.012%, B: 0.0012%, Sb: 0.005%, and the remainder being Fe and unavoidable impurities

In addition, the above-described spray device 3 was used as the lubricating oil adhesion device (refer to FIG. 1).

In Example 9, conditions of the spray device 3 were set as follows, and the lubricating oil was applied before the trimming.

· Conveying rate of the steel sheet: 115 [mpm]

· Oil application range by the spray device 3: 40 [mm] from the end surface in the steel sheet width direction, upper and lower surfaces

· Amount of oil used: 3.1 [L/hr] per single surface and 6.2 [L/hr] on both surfaces

(Oil application density: 11.2 [mL/m$^2$])

• Supply air pressure: 0.4 to 0.6 [MPa]

• Oil application amount at the steel sheet width center portion: 1.5 [g/m$^2$]

• Oil application amount in a range of 5 mm from the edge: 3.8 [g/m$^2$]

A part of the lubricating oil applied after the trimming is removed.

· Lubricating oil spray region: entire length, upper and lower surfaces, and both edges.

• Rotary blade diameter: $\phi$300 mm

• Clearance of the rotary blade: 9% of the steel sheet thickness

· Overlap amount of the rotary blades: 0.1 mm

• Vertical contact angle between the upper blade and the steel sheet: 8 degrees

· Angle between the rotation direction of the rotary blade and the conveyance direction of the steel sheet: 0.20 degrees on the conveyance backward side

• Cutting position: 20 mm from the edge

<Example 10>

In Example 10, the following was used as the steel sheet.

· Steel sheet: TS 1220 MPa, sheet thickness 2.0 mm Composition:

C: 0.12%, Si: 0.45%, Mn: 2.50%, P: 0.008%, S: 0.0012%, sol. Al: 0.030%, N: 0.0020%, Nb: 0.040%, Cr: 0.400%, Cu: 0.010%, Mo: 0.010%, Ni: 0.010%, Ti: 0.017%, B: 0.0012%, and the remainder being Fe and unavoidable impurities

In addition, the above-described spray device 3 was used as the lubricating oil adhesion device (refer to FIG. 1).

In Example 10, conditions of the spray device 3 were set as follows, and the lubricating oil was applied before the trimming.

· Conveying rate of the steel sheet: 230 [mpm]

· Oil application range by the spray device 3: 20 [mm] from the end surface in the steel sheet width direction, only the lower surface

· Amount of oil used: 0.8 [L/hr] per single surface and 1.6 [L/hr] on both surfaces

(Oil application density: 2.8 [mL/m$^2$])

· Supply air pressure: 0.4 to 0.6 [MPa]

· Oil application amount at the steel sheet width center portion: 1.5 [g/m$^2$]

· Oil application amount in a range of 5 mm from the edge: 2.5 [g/m$^2$]

· Lubricating oil spray region: entire length, upper and lower surfaces, and both edges.

· Rotary blade diameter: $\phi$300 mm

· Clearance of the rotary blade: 4% of the steel sheet thickness

· Overlap amount of the rotary blades: 2.5 mm

· Vertical contact angle between the upper blade and the steel sheet: 14 degrees

· Angle between the rotation direction of the rotary blade and the conveyance direction of the steel sheet: 0 degrees on the conveyance backward side

· Cutting position: 10 mm from the edge

<Evaluation>

Twenty coiled materials (product type: GA) were passed through the CGL under the same production conditions, and both edges of all the coils were trimmed over the entire length. Next, about 500 tons of mild steel was passed through the CGL. At this time, the occurrence rate of pressing flaws caused by foreign matter pressing excluding in-furnace pickup in the mild steel was evaluated. The occurrence rate of pressing flaws is the ratio of the weight of coiled material portions where pressing flaws were observed and removed in all of the weight of the passed coiled materials of the mild steel. The coil portion where the weight of the single coil after removing the pressing flaws was less than 1.5 tons was not sufficient from the viewpoint of the product weight, and thus was evaluated as fail. In addition, in the longitudinal center portion of the passed coiled material, the shear surface ratio and the occurrence frequency of protrusions were evaluated.

FIGS. 4A and 4B illustrate an example where the steel sheets according to Comparative Example 2 and Example 7 were observed with an SEM. FIG. 4A corresponds to Comparative Example 2, and FIG. 4B corresponds to Example 7.

As can be seen from FIGS. 4A and 4B, in the steel sheet in which the lubricating oil was applied to only the trimming blade by the felt, the shear surface ratio was large, and the boundary between the shear surface and the fracture surface had a complicated wavy shape (FIG. 4A). In contrast, in the steel sheet where the lubricating oil was directly applied to the steel sheet, the shear surface ratio was small, and the boundary between the shear surface and the fracture surface was significantly straight (FIG. 4B).

The evaluation results of each of the steel sheets are shown in Table 1.

[Table 1]

| | TS [MPa] | Oil Application Method | Oil Application Density [mL/m$^2$] | Shear Surface Ratio [%] | Protrusion Occurrence Frequency [pieces/100 mm] | Pressing Flaw Occurrence Rate [%] |
|---|---|---|---|---|---|---|
| Comp. Ex. 2 | 1020 | Felt | - | 25 | 41 | 2.0 |
| Ex. 7 | 1020 | Oil Spraying | 7.25 | 11 | 0 | 0.7 |
| Ex. 8 | 1220 | Oil Spraying | 2.8 | 10 | 3 | 1.0 |
| Ex. 9 | 1480 | Oil Spraying | 11.2 | 6 | 1 | 0.5 |
| Ex. 10 | 1220 | Oil Spraying | 2.8 | 18 | 14 | 1.8 |

In Examples 7 to 9 based on the present disclosure, the shear surface ratio and the occurrence frequency of protrusions were in the ranges of the present invention, and the occurrence rate of pressing flaws was also suppressed to be 1.0% or less. In contrast, in Comparative Example 2 where the lubricating oil was directly applied to the steel sheet, the clearance, the vertical contact angle between the upper blade and the steel sheet, and the angle between the rotation direction of the rotary blade and the conveyance direction of the steel sheet were not appropriate.

In Example 10, the cutting method according to the present disclosure was used. However, as the steel sheet, the shear surface ratio and the occurrence frequency of protrusions were outside the ranges of the present invention, and the occurrence rate of pressing flaws exceeded 1.0%. Note that, in Example 10, the shear surface ratio and the occurrence frequency of protrusions were less than those of Comparative Example 2.

It was found that, in the steel sheet where the first cut surface was formed using the cutting method according to the present disclosure, as compared to a case where the lubricating oil is directly applied to the rotary blade as in the related art, the peeling of iron powder after cutting is suppressed, and a steel sheet with higher quality than that in the related art can be provided.

In addition, it was found that, in the steel sheets according to Examples 7 and 9, the alkaline degreasing process was performed in a degreasing line of automotive parts before pressing such that poor degreasing did not occur.

(Others)

The present disclosure can also have the following configurations.

(1) According to the present embodiment, there is provided a production method of a steel sheet including a process of cutting an edge part of the steel sheet with at least one rotary blade, in which a lubricating oil is adhered to a position to be cut with the rotary blade on a steel sheet surface before cutting in the process of cutting the steel sheet with the rotary blade.
With this configuration, even when the lubricating oil adhered to the rotary blade is scattered by the centrifugal force of the rotary blade, the lubricating oil adhere to the surface of the steel sheet, and insufficient supply of the oil at the cutting position can be resolved, which reduces the friction. Thus, the frequency of blade chipping of the trimmer is suppressed, and the yield of the steel sheet production is improved.
(2) In the present embodiment, the rotary blade includes a pair of rotary blades capable of facing each other with respect to the steel sheet and is configured to cut the steel sheet interposed between the pair of rotary blades, and the lubricating oil is adhered to at least one surface among both front and back surfaces of the steel sheet. It is preferable that the lubricating oil is adhered to both of the front and back surfaces of the steel sheet.
With this configuration, by using the pair of rotary blades, the steel sheet can be more stably cut.
(3) The adhesion of the lubricating oil is performed, for example, by spraying the lubricating oil to the steel sheet surface.

With this configuration, the lubricating oil can be more uniformly adhered to the surface of the steel sheet.

It is preferable that, in the lubricating oil, an average diameter of sprayed mist of the lubricating oil is 1 um or more and 2000 um or less.

(4) The adhesion of the lubricating oil is performed, for example, by dropping the lubricating oil to the steel sheet surface.

With this configuration, the lubricating oil can be adhered to the surface of the steel sheet.

Here, an adhesion method of adhering the lubricating oil to an upper surface side of the steel sheet and an adhesion method of adhering the lubricating oil to a lower surface side of the steel sheet may be different from each other.

For example, the adhesion of the lubricating oil may be performed by dropping the lubricating oil to an upper surface of the steel sheet and spraying the lubricating oil to a lower surface of the steel sheet.

(5) An adhesion amount of the lubricating oil is adjusted to be less than 30 mL/m$^2$.

(6) A water content in the lubricating oil is 3000 ppm or less.

(7) A viscosity of the lubricating oil at 40°C is 3 mm$^2$/s or more and 130 mm$^2$/s or less.

(8) A film thickness uniformization tool configured to uniformize a film thickness of the lubricating oil adhered to the steel sheet surface is provided between the rotary blade and the adhesion position of the lubricating oil.

(9) In the present embodiment, a pair of press rolls is configured between the rotary blade and the adhesion position of the lubricating oil to grip the steel sheet, and a region of the steel sheet 1 gripped by the pair of press rolls includes at least a position of the steel sheet 1 to be cut with the rotary blade.

With this configuration, the lubricating oil adhered to the steel sheet is to be spread by the press rolls. As a result, the adhered lubricating oil is further uniformized along a steel sheet conveyance direction.

(10) In the present embodiment, the process of cutting the steel sheet with the rotary blade is performed while the steel sheet is being conveyed, and the rotary blade cuts the steel sheet while rotating in a forward direction with respect to a conveyance direction of the steel sheet.

With this configuration, a load on the rotary blade can be suppressed to be less than that when the rotary blade is rotated in the reverse direction.

(11) The steel sheet to be cut may be a high-tensile steel sheet, and a sheet thickness of the steel sheet may be, for example, 0.4 mm or more.

With the production method of the steel sheet according to the present embodiment, even when the steel sheet to be cut is a high-tensile steel sheet and a sheet thickness of the steel sheet is 0.4 mm or more, the steel sheet can be continuously cut with high yield.

(12) According to the present embodiment, there is provided a trimming device for cutting an edge part of a conveyed steel sheet with at least one rotary blade, the trimming device including: a lubricating oil adhesion device provided upstream of the rotary blade and configured to adhere a lubricating oil to a position of the steel sheet to be cut with the rotary blade.

With this configuration, even when the lubricating oil adhered to the rotary blade is scattered by the centrifugal force of the rotary blade, the lubricating oil adhere to the surface of the steel sheet, and insufficient supply of the oil at the cutting position can be resolved, which reduces the friction, and the frequency of blade chipping of the trimmer can be suppressed.

(13) According to the present embodiment, there is provided a production apparatus of a steel sheet 1 including the above-described trimming device.

With this configuration, the frequency of blade chipping of the trimmer is suppressed, and the yield of the steel sheet production is improved.

(14) A chemical composition of the steel sheet includes, by mass%, C: 0.03% or more and 0.35% or less, Si: 0.01% or more and 3.00% or less, Mn: 0.50% or more and 3.50% or less, Al: 0.001% or more and 1.000% or less, P: 0.100% or less, S: 0.0100% or less, N: 0.0200% or less, one kind or two or more kinds of B: 0.0050% or less, Nb: 0.100% or less, Ti: 0.200% or less, Cr: 1.000% or less, Mo: 1.00% or less, Cu: 1.000% or less, Ni: 1.000% or less, Sb: 0.200% or less, Zr: 0.100% or less, V: 0.200% or less, W: 0.100% or less, Sn: 0.200% or less, Ca: 0.0050% or less, REM: 0.0050% or less, and Mg: 0.0050% or less, and a remainder being Fe and unavoidable impurities.

(15) The rotary blade includes a pair of rotary blades capable of facing each other with respect to the steel sheet and is configured to cut the steel sheet interposed between the pair of rotary blades, a clearance of an upper blade and a lower blade in the pair of rotary blades is 5% or more and 19% or less, a vertical contact angle of the upper blade and the steel sheet in a rotation direction of the rotary blade is 3 degrees or more and 13 degrees or less, and an angle between the rotation direction of the rotary blade and a conveyance direction of the steel sheet is 0.01 degrees or more and 0.5 degrees or less in a direction in which the angle is an opening angle toward a conveyance backward side.

(16) There is provided a trimming device for cutting an edge part of a conveyed steel sheet with at least one rotary blade, the trimming device including a lubricating oil adhesion device provided upstream of the rotary blade and configured to adhere a lubricating oil to a position of the steel sheet to be cut with the rotary blade.

(17) According to the present disclosure, there is provided a production apparatus of a steel sheet including the above-described trimming device for a steel sheet.

(18) There is provided a rolled steel sheet where at least one end surface of both ends in a width direction is formed of a cut surface, in which a tensile strength TS of the steel sheet is 590 MPa or more and less than 980 MPa, in a first cut surface as at least a part of the cut surface in a longitudinal direction of the steel sheet, a shear surface ratio (%) satisfies Expression (1), and the number of protrusions present in a boundary between a shear surface and a fracture surface in the first cut surface is 5 pieces/100 mm or less,

$$19 - 0.0146 \times TS \leq \text{the shear surface ratio} \leq 48 - 0.0300 \times TS \qquad \text{Expression (1).}$$

(19) There is provided a rolled steel sheet where at least one end surface of both ends in a width direction is formed of a cut surface, in which a tensile strength TS of the steel sheet is 980 MPa or more and less than 1180 MPa, in a first cut surface as at least a part of the cut surface in a longitudinal direction of the steel sheet, a shear surface ratio (%) satisfies Expression (2), and the number of protrusions present in a boundary between a shear surface and a fracture surface in the first cut surface is 5 pieces/100 mm or less,

$$10 - 0.00526 \times TS \leq \text{the shear surface ratio} \leq 36 - 0.0180 \times TS \qquad \text{Expression (2).}$$

(20) There is provided a rolled steel sheet where at least one end surface of both ends in a width direction is formed of a cut surface, in which a tensile strength TS of the steel sheet is 1180 MPa or more and less than 1320 MPa, in a first cut surface as at least a part of the cut surface in a longitudinal direction of the steel sheet, a shear surface ratio (%) satisfies Expression (3), and the number of protrusions present in a boundary between a shear surface and a fracture surface of the cut surface is 5 pieces/100 mm or less,

$$10 - 0.00526 \times TS \leq \text{the shear surface ratio} \leq 27 - 0.0108 \times TS \qquad \text{Expression (3).}$$

(21) There is provided a rolled steel sheet where at least one end surface of both ends in a width direction is formed of a cut surface, in which a tensile strength TS of the steel sheet is 1320 MPa or more and less than 1850 MPa, in a first cut surface as at least a part of the cut surface in a longitudinal direction of the steel sheet, a shear surface ratio (%) satisfies Expression (4), and the number of protrusions present in a boundary between a shear surface and a fracture surface in the first cut surface is 5 pieces/100 mm or less,

```
3 ≤ the shear surface ratio ≤ 16 - 0.0254 × TS ...

Expression (4).
```

(22) Regarding an oil application amount of at least one steel sheet surface among steel sheet surfaces facing each other in a sheet thickness direction, an oil application amount in a region up to 5 mm from an end surface in a width direction configured with the first cut surface is more than an oil application amount at a center position in the width direction by 0.2 $g/m^2$ or more.

(23) An oil application amount of a steel sheet surface in a region up to 5 mm from an end surface in a width direction configured with the first cut surface is 2.7 $g/m^2$ or more.

(24) The oil application amount of the steel sheet surface in the region up to 5 mm from the end surface in the width direction configured with the first cut surface is 6.5 $g/m^2$ or more.

(25) A composition of the steel sheet includes, by mass%, C: 0.03% or more and 0.35% or less, Si: 0.01% or more and 3.00% or less, Mn: 0.50% or more and 3.50% or less, Al: 0.001% or more and 1.000% or less, P: 0.100% or less, S: 0.0100% or less, N: 0.0200% or less, one kind or two or more kinds of B: 0.0050% or less, Nb: 0.100% or less, Ti: 0.200% or less, Cr: 1.000% or less, Mo: 1.00% or less, Cu: 1.000% or less, Ni: 1.000% or less, Sb: 0.200% or less, Zr: 0.100% or less, V: 0.200% or less, W: 0.100% or less, Sn: 0.200% or less, Ca: 0.0050% or less, REM: 0.0050% or less, and Mg: 0.0050% or less, and a remainder including Fe and unavoidable impurities.

(26) The composition of the steel sheet includes, by mass%, C: 0.10% or more and 0.35% or less and Mn: 1.00% or more and 3.50% or less.

(27) The composition of the steel sheet includes, by mass%, Mn: 2.2% or more.

(28) There is provided a coiled material obtained by winding the rolled steel sheet according to the present disclosure in a roll shape.

(29) There is provided a blank material for pressing obtained by processing the rolled steel sheet according to the present disclosure, in which an end surface of at least one side is formed of the first cut surface.

Reference Signs List

1 steel sheet
1a, 1b steel sheet surface
2 rotary blade
2A, 2B pair of rotary blades
3 spray device (lubricating oil adhesion device)
7 press roll
9 felt
20 oil dropping device (lubricating oil adhesion device)

**Claims**

1.  A production method of a steel sheet comprising:

    a process of cutting an edge part of the steel sheet with at least one rotary blade,
    wherein a lubricating oil is adhered to a position to be cut with the rotary blade on a steel sheet surface before cutting in the process of cutting the steel sheet with the rotary blade.

2.  The production method of a steel sheet according to claim 1,

    wherein the rotary blade includes a pair of rotary blades capable of facing each other with respect to the steel sheet and is configured to cut the steel sheet interposed between the pair of rotary blades, and
    the lubricating oil is adhered to at least one surface among both front and back surfaces of the steel sheet.

3. The production method of a steel sheet according to claim 1 or 2,
   wherein the adhesion of the lubricating oil is performed by spraying the lubricating oil to the steel sheet surface.

4. The production method of a steel sheet according to claim 3,
   wherein an average diameter of sprayed mist of the lubricating oil is 1 um or more and 2000 um or less.

5. The production method of a steel sheet according to claim 1 or 2,
   wherein the adhesion of the lubricating oil is performed by dropping the lubricating oil to the steel sheet surface.

6. The production method of a steel sheet according to any one of claims 1 to 5,
   wherein the adhesion of the lubricating oil is performed by dropping the lubricating oil to an upper surface of the steel sheet and spraying the lubricating oil to a lower surface of the steel sheet.

7. The production method of a steel sheet according to any one of claims 1 to 6,
   wherein an adhesion amount of the lubricating oil is adjusted to be less than 30 mL/m$^2$.

8. The production method of a steel sheet according to any one of claims 1 to 7,
   wherein a water content in the lubricating oil is 3000 ppm or less.

9. The production method of a steel sheet according to any one of claims 1 to 8,
   wherein a viscosity of the lubricating oil at 40°C is 3 mm$^2$/s or more and 130 mm$^2$/s or less.

10. The production method of a steel sheet according to any one of claims 1 to 9,
    wherein a film thickness uniformization tool configured to uniformize a film thickness of the lubricating oil adhered to the steel sheet surface is provided between the rotary blade and the adhesion position of the lubricating oil.

11. The production method of a steel sheet according to any one of claims 1 to 10,

    wherein a pair of press rolls is configured between the rotary blade and the adhesion position of the lubricating oil to grip the steel sheet, and
    a region of the steel sheet gripped by the pair of press rolls includes at least a position of the steel sheet to be cut with the rotary blade.

12. The production method of a steel sheet according to any one of claims 1 to 11,

    wherein the process of cutting the steel sheet with the rotary blade is performed while the steel sheet is being conveyed, and
    the rotary blade cuts the steel sheet while rotating in a forward direction with respect to a conveyance direction of the steel sheet.

13. The production method of a steel sheet according to any one of claims 1 to 12,

    wherein the steel sheet is a high-tensile steel sheet, and
    a sheet thickness of the steel sheet is 0.4 mm or more.

14. The production method of a steel sheet according to claim 13,
    wherein a chemical composition of the steel sheet includes, by mass%, C: 0.03% or more and 0.35% or less, Si: 0.01% or more and 3.00% or less, Mn: 0.50% or more and 3.50% or less, Al: 0.001% or more and 1.000% or less, P: 0.100% or less, S: 0.0100% or less, N: 0.0200% or less, one kind or two or more kinds of B: 0.0050% or less, Nb: 0.100% or less, Ti: 0.200% or less, Cr: 1.000% or less, Mo: 1.00% or less, Cu: 1.000% or less, Ni: 1.000% or less, Sb: 0.200% or less, Zr: 0.100% or less, V: 0.200% or less, W: 0.100% or less, Sn: 0.200% or less, Ca: 0.0050% or less, REM: 0.0050% or less, and Mg: 0.0050% or less, and a remainder being Fe and unavoidable impurities.

15. The production method of a steel sheet according to any one of claims 1 to 14,

    wherein the rotary blade includes a pair of rotary blades capable of facing each other with respect to the steel sheet and is configured to cut the steel sheet interposed between the pair of rotary blades,
    a clearance of an upper blade and a lower blade in the pair of rotary blades is 5% or more and 19% or less,

a vertical contact angle of the upper blade and the steel sheet in a rotation direction of the rotary blade is 3 degrees or more and 13 degrees or less, and

an angle between the rotation direction of the rotary blade and a conveyance direction of the steel sheet is 0.01 degrees or more and 0.5 degrees or less in a direction in which the angle is an opening angle toward a conveyance backward side.

16. A trimming device for cutting an edge part of a conveyed steel sheet with at least one rotary blade, the trimming device comprising:

a lubricating oil adhesion device provided upstream of the rotary blade and configured to adhere a lubricating oil to a position of the steel sheet to be cut with the rotary blade.

17. A production apparatus of a steel sheet comprising:

the trimming device for a steel sheet according to claim 16.

18. A rolled steel sheet where at least one end surface of both ends in a width direction is formed of a cut surface,

wherein a tensile strength TS of the steel sheet is 590 MPa or more and less than 980 MPa,
in a first cut surface as at least a part of the cut surface in a longitudinal direction of the steel sheet, a shear surface ratio (%) satisfies Expression (1), and
the number of protrusions present in a boundary between a shear surface and a fracture surface in the first cut surface is 5 pieces/100 mm or less,

$$19 - 0.0146 \times TS \leq \text{the shear surface ratio} \leq 48 - 0.0300 \times TS \qquad \text{Expression (1)}.$$

19. A rolled steel sheet where at least one end surface of both ends in a width direction is formed of a cut surface,

wherein a tensile strength TS of the steel sheet is 980 MPa or more and less than 1180 MPa,
in a first cut surface as at least a part of the cut surface in a longitudinal direction of the steel sheet, a shear surface ratio (%) satisfies Expression (2), and
the number of protrusions present in a boundary between a shear surface and a fracture surface in the first cut surface is 5 pieces/100 mm or less,

$$10 - 0.00526 \times TS \leq \text{the shear surface ratio} \leq 36 - 0.0180 \times TS \qquad \text{Expression (2)}.$$

20. A rolled steel sheet where at least one end surface of both ends in a width direction is formed of a cut surface,

wherein a tensile strength TS of the steel sheet is 1180 MPa or more and less than 1320 MPa,
in a first cut surface as at least a part of the cut surface in a longitudinal direction of the steel sheet, a shear surface ratio (%) satisfies Expression (3), and
the number of protrusions present in a boundary between a shear surface and a fracture surface of the cut surface is 5 pieces/100 mm or less,

$$10 - 0.00526 \times TS \leq \text{the shear surface ratio} \leq 27 - 0.0108 \times TS \qquad \text{Expression (3)}.$$

21. A rolled steel sheet where at least one end surface of both ends in a width direction is formed of a cut surface,

wherein a tensile strength TS of the steel sheet is 1320 MPa or more and less than 1850 MPa,
in a first cut surface as at least a part of the cut surface in a longitudinal direction of the steel sheet, a shear surface ratio (%) satisfies Expression (4), and
the number of protrusions present in a boundary between a shear surface and a fracture surface in the first cut surface is 5 pieces/100 mm or less,

$$3 \leq \text{the shear surface ratio} \leq 16 - 0.0254 \times TS \ldots$$

Expression (4).

**22.** The rolled steel sheet according to any one of claims 18 to 21,

wherein regarding an oil application amount of at least one steel sheet surface among steel sheet surfaces facing each other in a sheet thickness direction,
an oil application amount in a region up to 5 mm from an end surface in a width direction configured with the first cut surface is more than an oil application amount at a center position in the width direction by 0.2 $g/m^2$ or more.

**23.** The rolled steel sheet according to any one of claims 18 to 22,
wherein an oil application amount of a steel sheet surface in a region up to 5 mm from an end surface in a width direction configured with the first cut surface is 2.7 $g/m^2$ or more.

**24.** The rolled steel sheet according to claim 23,
wherein the oil application amount of the steel sheet surface in the region up to 5 mm from the end surface in the width direction configured with the first cut surface is 6.5 $g/m^2$ or more.

**25.** The rolled steel sheet according to any one of claims 18 to 24,
wherein a chemical composition of the steel sheet includes, by mass%, C: 0.03% or more and 0.35% or less, Si: 0.01% or more and 3.00% or less, Mn: 0.50% or more and 3.50% or less, Al: 0.001% or more and 1.000% or less, P: 0.100% or less, S: 0.0100% or less, N: 0.0200% or less, one kind or two or more kinds of B: 0.0050% or less, Nb: 0.100% or less, Ti: 0.200% or less, Cr: 1.000% or less, Mo: 1.00% or less, Cu: 1.000% or less, Ni: 1.000% or less, Sb: 0.200% or less, Zr: 0.100% or less, V: 0.200% or less, W: 0.100% or less, Sn: 0.200% or less, Ca: 0.0050% or less, REM: 0.0050% or less, and Mg: 0.0050% or less, and a remainder being Fe and unavoidable impurities.

**26.** The rolled steel sheet according to claim 25,
wherein the composition of the steel sheet includes, by mass%, C: 0.10% or more and 0.35% or less and Mn: 1.00% or more and 3.50% or less.

**27.** The rolled steel sheet according to claim 26,
wherein the composition of the steel sheet includes, by mass%, Mn: 2.20% or more.

**28.** A coiled material obtained by winding the rolled steel sheet according to any one of claims 18 to 27 in a roll shape.

**29.** A blank material for pressing obtained by processing the rolled steel sheet according to any one of claims 18 to 27, wherein an end surface of at least one side is formed of the first cut surface.

## FIG. 1

CONVEYANCE
DIRECTION

FIG. 2

# FIG. 3

CONVEYANCE
DIRECTION

FIG. 4A

FIG. 4B

34

# FIG. 5

1mm

## INTERNATIONAL SEARCH REPORT

| International application No. |
| --- |
| **PCT/JP2022/010686** |

| A. | CLASSIFICATION OF SUBJECT MATTER |
| --- | --- |

*B23D 19/06*(2006.01)i; *B23Q 11/10*(2006.01)i
FI: B23D19/06 A; B23Q11/10 A

According to International Patent Classification (IPC) or to both national classification and IPC

| B. | FIELDS SEARCHED |
| --- | --- |

Minimum documentation searched (classification system followed by classification symbols)

B21B1/00-B21B99/00; B23C1/00-B23C9/00; B23D1/00-B23D81/00; B23Q11/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 8-155509 A (KAWASAKI STEEL CORP) 18 June 1996 (1996-06-18) | 1-2, 5, 10-11, 16-17 |
|  | p. 2, left column, line 30 to p. 3, right column, line 40, fig. 1-2 |  |
| Y |  | 3-4, 8-9, 12-14 |
| A |  | 6-7, 15, 18-29 |
| Y | JP 9-38709 A (SUMITOMO METAL IND LTD) 10 February 1997 (1997-02-10) | 3-4, 8-9, 12-14 |
|  | paragraphs [0015], [0020], [0055], fig. 7 |  |
| Y | JP 5-212430 A (FURUKAWA ALUM CO LTD) 24 August 1993 (1993-08-24) | 8-9, 12-14 |
|  | paragraph [0014], fig. 3-5 |  |
| Y | JP 2007-160367 A (JFE STEEL KK) 28 June 2007 (2007-06-28) | 9, 12-14 |
|  | paragraph [0055] |  |
| Y | JP 8-126909 A (MITSUBISHI HEAVY IND LTD) 21 May 1996 (1996-05-21) | 12-14 |
|  | fig. 3 |  |
| Y | JP 2012-55955 A (NIPPON STEEL CORP) 22 March 2012 (2012-03-22) | 13-14 |
|  | paragraphs [0027], [0034], fig. 1 |  |

| ☑ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **13 April 2022** | **17 May 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** |  |
|  | Telephone No. |

Form PCT/ISA/210 (second sheet) (January 2015)

# EP 4 474 087 A1

<table>
<tr><td colspan="2">INTERNATIONAL SEARCH REPORT</td><td>International application No.<br><br>**PCT/JP2022/010686**</td></tr>
</table>

**C.  DOCUMENTS CONSIDERED TO BE RELEVANT**

| Category* | Citation of document, with indication, where appropriate, of the relevant passages | Relevant to claim No. |
|---|---|---|
| Y | JP 2007-177326 A (JFE STEEL KK) 12 July 2007 (2007-07-12)<br>claim 1, paragraph [0063] | 14 |
| A | JP 2022-30694 A (NIPPON STEEL CORP) 18 February 2022 (2022-02-18)<br>paragraphs [0037], [0086], fig. 1 | 1 |
| A | JP 58-16706 A (NIPPON KOKAN KK) 31 January 1983 (1983-01-31)<br>p. 2, lower right column, lines 3-6, fig. 2 | 1, 7 |
| A | JP 59-35805 A (NIPPON KOKAN KK) 27 February 1984 (1984-02-27)<br>p. 3, lower right column, lines 5-6, fig. 3, 5 | 1 |
| A | JP 63-89216 A (NIPPON STEEL CORP) 20 April 1988 (1988-04-20)<br>p. 2, upper left column, lines 5-7 | 15 |
| A | JP 2007-144548 A (NIPPON STEEL CORP) 14 June 2007 (2007-06-14)<br>paragraph [0014] | 15 |
| A | JP 2011-143430 A (SUMITOMO METAL IND LTD) 28 July 2011 (2011-07-28)<br>paragraphs [0062], [0069], fig. 2 | 18-29 |
| A | WO 2021/153037 A1 (NIPPON STEEL CORP) 05 August 2021 (2021-08-05)<br>paragraph [0133] | 18-29 |
| A | KR 10-0643363 B1 (POSCO) 10 November 2006 (2006-11-10)<br>fig. 4a, 7 | 1 |
| A | CN 209849979 U (HUNANJINSHA HEAVY INDUSTRY TECHNOLOGY CO., LTD.) 27 December 2019 (2019-12-27)<br>fig. 1 | 1 |
| E, X<br>E, A | JP 2022-50331 A (JFE STEEL KK) 30 March 2022 (2022-03-30) | 1-17<br>18-29 |

## INTERNATIONAL SEARCH REPORT

| International application No. |
| --- |
| **PCT/JP2022/010686** |

**Box No. III    Observations where unity of invention is lacking (Continuation of item 3 of first sheet)**

This International Searching Authority found multiple inventions in this international application, as follows:

Document 1: JP 8-155509 A (KAWASAKI STEEL CORP) 18 June 1996 (1996-06-18), p. 2, left column, line 30 to p. 3, right column, line 40, fig. 1-2 (Family: none)

Claims are classified into the following two inventions.

(Invention 1) Claims 1-17
    Document 1 discloses a steel plate manufacturing method that comprises a process of cutting an edge of a steel plate with a rotary blade, wherein: during the process of cutting a steel plate with a rotary blade, lubricating oil adheres to the position to be cut with the rotary blade on the surface of the steel plate before cutting; the rotary blade has a pair of rotary blades that can face each other with the steel plate therebetween; the steel plate is sandwiched and cut between the pair of rotary blades; and the lubricating oil adheres to at least one of the front and rear sides of the steel plate. Claims 1-2 lack novelty in light of document 1, and thus do not have a special technical feature. However, claim 3 dependent on claim 1 has the special technical feature in which adhesion of lubricating oil is performed by spaying the lubricating oil toward the surface of a steel plate. Also, claims 4 and 6-15 referring to claim 3 have the same technical feature as claim 3. Therefore, claims 1-4 and 6-15 are classified as invention 1.
    Also, claim 5 is dependent on claim 1 and inventively related to claim 1, and is thus classified as invention 1.
    In addition, claim 16-17 is substantially identical to or similarly closely related to claim 1, and is thus classified as invention 1.

(Invention 2) Claims 18-29
    It cannot be said that claims 18-29 have a technical feature identical or corresponding to that of claim 1 classified as invention 1.
    In addition, claims 18-29 are not dependent on claim 1. In addition, claims 18-29 are not substantially identical to or similarly closely related to any of the claims classified as invention 1.
    Therefore, claims 18-29 cannot be classified as invention 1.
    Also, claims 18-29 have the special technical feature of a "rolled steel plate in which at least one end surface of both ends in the width direction is a cut surface, wherein on a first cut surface that is at least a portion of the cut surface in the longitudinal direction of the steel plate, the number of protrusions existing on the boundary between the sheared surface and fractured surface is less than or equal to 5 per 100 mm," and are thus classified as invention 2.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

**INTERNATIONAL SEARCH REPORT**
**Information on patent family members**

International application No.

**PCT/JP2022/010686**

| Patent document cited in search report | | | Publication date (day/month/year) | Patent family member(s) | Publication date (day/month/year) |
|---|---|---|---|---|---|
| JP | 8-155509 | A | 18 June 1996 | (Family: none) | |
| JP | 9-38709 | A | 10 February 1997 | (Family: none) | |
| JP | 5-212430 | A | 24 August 1993 | (Family: none) | |
| JP | 2007-160367 | A | 28 June 2007 | (Family: none) | |
| JP | 8-126909 | A | 21 May 1996 | (Family: none) | |
| JP | 2012-55955 | A | 22 March 2012 | (Family: none) | |
| JP | 2007-177326 | A | 12 July 2007 | (Family: none) | |
| JP | 2022-30694 | A | 18 February 2022 | (Family: none) | |
| JP | 58-16706 | A | 31 January 1983 | (Family: none) | |
| JP | 59-35805 | A | 27 February 1984 | (Family: none) | |
| JP | 63-89216 | A | 20 April 1988 | (Family: none) | |
| JP | 2007-144548 | A | 14 June 2007 | (Family: none) | |
| JP | 2011-143430 | A | 28 July 2011 | (Family: none) | |
| WO | 2021/153037 | A1 | 05 August 2021 | (Family: none) | |
| KR | 10-0643363 | B1 | 10 November 2006 | (Family: none) | |
| CN | 209849979 | U | 27 December 2019 | (Family: none) | |
| JP | 2022-50331 | A | 30 March 2022 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005153116 A